(19)

Europäisches
Patentamt

European
Patent Office

Office européen
des brevets

(11) **EP 4 146 047 B1**

(12) **EUROPEAN PATENT SPECIFICATION**

(45) Date of publication and mention
of the grant of the patent:
**26.02.2025   Bulletin 2025/09**

(21) Application number: **20934840.8**

(22) Date of filing: **06.10.2020**

(51) International Patent Classification (IPC):
***A47L 9/28*** *(2006.01)*

(52) Cooperative Patent Classification (CPC):
**A47L 11/4011; A47L 9/2894; A47L 11/4061;
G05D 1/243; G05D 1/246; G05D 1/249;
G05D 1/695; G05D 1/6985;** A47L 2201/04;
G05D 2105/10; G05D 2107/40; G05D 2109/10;
G05D 2111/10

(86) International application number:
**PCT/KR2020/013541**

(87) International publication number:
**WO 2021/225234 (11.11.2021 Gazette 2021/45)**

(54) **ROBOT CLEANER AND METHOD FOR CONTROLLING THE SAME**

REINIGUNGSROBOTER UND VERFAHREN ZUR STEUERUNG DAVON

ROBOT NETTOYEUR ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **08.05.2020   KR 20200055280**

(43) Date of publication of application:
**15.03.2023   Bulletin 2023/11**

(73) Proprietor: **LG Electronics, Inc.
Yeongdeungpo-gu
Seoul 07336 (KR)**

(72) Inventors:
• **KWAK, Donghoon
Seoul 08592 (KR)**
• **SHIN, Yongmin
Seoul 08592 (KR)**
• **LEE, Taejae
Seoul 08592 (KR)**

(74) Representative: **Ter Meer Steinmeister & Partner
Patentanwälte mbB
Nymphenburger Straße 4
80335 München (DE)**

(56) References cited:
WO-A1-2020/004834     JP-A- 2019 121 365
JP-B2- 6 666 695          KR-A- 20190 088 115
KR-B1- 101 855 831       KR-B1- 102 015 498
US-A1- 2019 212 752

## Description

### Technical Field

The present disclosure relates to a robot cleaner and a method for controlling the same, and more specifically to, a robot cleaner and a method for controlling the same in which two robot cleaners may accurately recognize and align each other's positions at the beginning to perform cleaning together.

### Background Art

A cleaner is an apparatus that performs a cleaning function by inhaling dust and foreign substances or mopping. In general, the cleaner performs the cleaning function for a floor, and the cleaner includes a wheel for movement. In general, the wheel is rolled by an external force applied to a cleaner body to move the cleaner body relative to the floor.

However, as a robot cleaner that performs cleaning while autonomously traveling without user manipulation has been developed, there is a need for development to allow a plurality of robot cleaners to collaborate with each other and perform the cleaning without the user manipulation.

Prior art document WO2017-036532 discloses a method for controlling, by a master robot cleaning device (hereinafter, a master robot) at least one slave robot cleaning device (hereinafter, a slave robot). The prior art document discloses a configuration in which the master robot detects a surrounding obstacle using an obstacle detection device and determines a position of the master robot associated with the slave robot using position data derived from the obstacle detection device.

Further, KR20170174493 discloses a general process of performing cleaning while two robot cleaners communicate with each other.

However, in the two prior art documents described above, a more detailed control between an anterior robot cleaner and a posterior robot cleaner is not disclosed. In particular, when the two robot cleaners perform the cleaning together at the beginning, it is necessary to accurately recognize each other's positions. The two cleaners start to perform the cleaning together based on initially aligned positions thereof. When a problem occurs in the initial positions thereof, control of moving the two cleaners together becomes complicated. Further, when the two cleaners do not correctly recognize the each other's positions, the two cleaners may collide with each other.

In addition, there is a need to control the cleaning of the anterior robot cleaner and the posterior robot cleaner by changing a cleaning scheme, especially, a travel scheme, of the posterior robot cleaner in consideration of a cleaning environment of the anterior robot cleaner, but such technical consideration is not disclosed. In particular, when a plurality of robot cleaners travel in the same space together, control for preventing interference therebetween in travel is required. Another method for controlling a robot cleaner is known from WO-A-2020004834.

### Disclosure of Invention

### Technical Problem

The present disclosure is to provide a robot cleaner and a method for controlling the same that may perform cleaning in an optimized manner without user intervention.

In addition, the present disclosure is to provide a robot cleaner and a method for controlling the same in which a plurality of robot cleaners may accurately recognize each other's positions at the beginning and may be aligned at desired positions.

The present disclosure is to provide a robot cleaner and a method for controlling the same in which interference between an anterior robot cleaner and a posterior robot cleaner does not occur by taking into account a cleaning environment of the anterior robot cleaner and the posterior robot cleaner.

In addition, the present disclosure is to provide a robot cleaner and a method for controlling the same in which an anterior robot cleaner and a posterior robot cleaner may perform cleaning together by adjusting a distance between the anterior robot cleaner and the posterior robot cleaner.

### Solution to Problem

In the present disclosure, a plurality of robot cleaners may accurately recognize each other's positions, so that an environment in which the robot cleaners may perform cleaning together in the same space may be provided. Further, because initial positions for the plurality of robot cleaners to start the cleaning may be easily selected, so that control may be simplified when two robot cleaners perform the cleaning.

In the present disclosure, first of all, a robot cleaner is moved to be placed close to another cleaner, which is to be followed. In this connection, whether the robot cleaner is getting close to another cleaner may be determined while the robot cleaner is moving all directions in a random manner, such as a circular or spiral manner.

Subsequently, the robot cleaner is moved or turned such that an image captured by a camera of the robot cleaner becomes similar to an image captured by another cleaner while comparing the image captured by a camera of another cleaner with the image captured by the camera of the robot cleaner. In this connection, whether the two images are similar to each other may be determined based on arrangement of feature points. In one example, because positions of the two cleaners are not exactly the same, there may be a difference in the provided images. However, whether the two images are similar to or different from each other may be determined based on arrangement of the feature points in a left and right direction and the like. When it is not determined that the two images are similar to each other, the robot cleaner is moved to change the image captured by the camera of the robot cleaner, and whether the image has changed is identified.

When the two images become similar to each other, the robot cleaner may determine that the robot cleaner and another cleaner are arranged in a line, and determine that a front region of the robot cleaner and a front region of another cleaner match each other. Therefore, the robot cleaner may accurately identify a position of another cleaner.

The present disclosure provide a robot cleaner and a method for controlling the same in which an anterior robot cleaner travels in a zigzag manner and a posterior robot cleaner performs cleaning while maintaining a distance, which varies based on a horizontal direction travel distance of a cleaning region.

The anterior robot cleaner and the posterior robot cleaner alternately travel in a horizontal direction and a longitudinal direction. Even while the two robot cleaners perform the cleaning while traveling together, the two robot cleaners may perform the cleaning while traveling without interference therebetween.

Because the posterior robot cleaner performs the cleaning while traveling along a travel trajectory of the anterior robot cleaner, a robot cleaner and a method for controlling the same in which the same region may be cleaned twice is provided.

The present disclosure provides a robot cleaner including a sensing unit that senses another cleaner preceding in a sensing region, and a controller that compares the horizontal direction travel distance with a second set distance to adjust a travel distance between another cleaner and the robot cleaner.

Specifically, when a horizontal direction travel distance or a horizontal direction travelable distance of another cleaner or the robot cleaner is larger than the second set distance, the robot cleaner may travel while maintaining the second set distance from another cleaner in the horizontal direction.

When the horizontal direction travel distance or the horizontal direction travelable distance of another cleaner or the robot cleaner is smaller than the second set distance, the robot cleaner may travel while maintaining a third set distance from another cleaner in the longitudinal direction.

In the present disclosure, the horizontal direction travelable distance may be determined to determine whether to adjust the distance between another cleaner and the robot cleaner in the horizontal direction or in the longitudinal direction.

When the horizontal direction travel distance is relatively small, the travel distance may be adjusted in the longitudinal direction rather than the horizontal direction, so that the two robot cleaners may travel without the interference.

On the other hand, when the horizontal direction travel distance is large, the travel distance may be adjusted in the horizontal direction rather than the longitudinal direction, so that the two robot cleaners may be controlled to perform the cleaning while traveling without leaving the sensing region.

The present disclosure provides a robot cleaner including a driver for moving or turning a body, a sensing unit for sensing preceding another cleaner in a sensing region, and a controller that, when another cleaner travels in a zigzag manner of moving in a horizontal direction with a relatively large length and then switching to a vertical direction to move in a longitudinal direction with a relatively small length, wherein another cleaner travels in the horizontal direction until encountering an obstacle and travels in the longitudinal direction by a first set distance, controls the driver to travel along another cleaner in a first mode when a horizontal direction travel distance is smaller than a second set distance, and to travel along another cleaner in a second mode when the horizontal direction travel distance is larger than the second set distance.

In addition, the present disclosure provides a method for controlling a robot cleaner in which another cleaner travels in a zigzag manner of moving in a horizontal direction with a relatively large length and then switching to a vertical direction to move in a longitudinal direction with a relatively small length, wherein another cleaner travels in the horizontal direction until encountering an obstacle and travels in the longitudinal direction by a first set distance. The method includes a first operation of identifying a horizontal direction travel distance, a second operation of identifying whether the horizontal direction travel distance is smaller than a second set distance, and an operation of allowing the robot cleaner to travel in a first mode when the horizontal direction travel distance is smaller than the second set distance and allowing the robot cleaner to travel in a second mode when the horizontal direction travel distance is larger than the second set distance to allow the robot cleaner to perform the cleaning while traveling along another cleaner.

## Advantageous Effects of Invention

According to the present disclosure, a plurality of autonomous cleaners capable of accurately identifying a relative position of a further cleaner may be provided.

In addition, according to the present disclosure, the plurality of robot cleaners may accurately recognize each other's positions. In addition, according to the present disclosure, the plurality of robot cleaners may be aligned at initially set positions thereof before starting cleaning, thereby performing the cleaning while moving together based on a determined algorithm while performing the cleaning.

According to the present disclosure, when the plurality of robot cleaners clean the same space, travel interference between the plurality of robot cleaners does not occur, so that a cleaning performance may be improved.

Further, according to the present disclosure, a distance between two robot cleaners may be adjusted differently based on a space in which the cleaning is performed, thereby providing an environment in which the cleaning may be performed in various forms.

## Brief Description of Drawings

FIG. 1 is a perspective view illustrating an example of an autonomous cleaner according to the present disclosure.

FIG. 2 is a plan view of an autonomous cleaner illustrated in FIG. 1.

FIG. 3 is a side view of an autonomous cleaner illustrated in FIG. 1.

FIG. 4 is a block diagram illustrating exemplary components of an autonomous cleaner according to an embodiment of the present disclosure.

(a) FIG. 5 is a conceptual diagram illustrating network communication between a plurality of autonomous cleaners according to an embodiment of the present disclosure, (b) in FIG. 5 is a conceptual diagram illustrating an example of network communication in (a) in FIG. 5, and (c) in FIG. 5 is a conceptual diagram for describing following travel of a plurality of autonomous cleaners according to an embodiment of the present disclosure.

(a) in FIG. 6, (b) in FIG. 6, and (c) in FIG. 6 are conceptual diagrams for describing following registration and following control between a first cleaner and a mobile device according to a variation embodiment of the present disclosure.

FIG. 7 is a flowchart for describing a control method according to an embodiment.

FIG. 8 is a conceptual diagram for describing a control method shown in FIG. 7.

FIG. 9 is a diagram for describing position determination in detail.

FIG. 10 is a flowchart for describing a control method according to another embodiment.

FIG. 11 is a diagram illustrating a state in which two cleaners are arranged in one cleaning space.

FIG. 12 is a diagram illustrating a process in which two cleaners recognize and align positions thereof.

## Mode for the Invention

Embodiments disclosed herein will be described in detail with reference to the accompanying drawings. It should be noted that technical terms used herein are only used to describe a specific embodiment, and are not intended to limit the spirit of the technology disclosed herein.

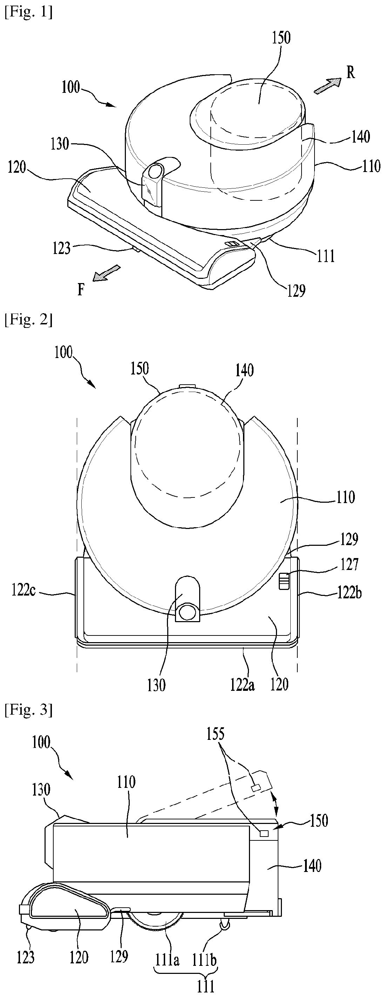

In this specification, a mobile robot, an autonomous cleaner, and a cleaner performing autonomous travel may be used in the same sense. Moreover, in this specification, a plurality of autonomous cleaners may include at least some of components illustrated in FIGS. 1 to 3 below.

Referring to FIGS. 1 to 3, the autonomous cleaner 100 performs a function of cleaning a floor while autonomously traveling in a certain region. The cleaning of the floor referred to herein includes inhalation of dust (including foreign substances) on the floor, and mopping of the floor.

The autonomous cleaner 100 may include a cleaner body 110, a cleaning unit 120, a sensing unit 130, and a dust collection vessel 140.

Various parts including a controller (not shown) for controlling the autonomous cleaner 100 are embedded or mounted in the cleaner body 110. Moreover, the cleaner body 110 is equipped with a wheel unit 111 for the travel of the autonomous cleaner 100. The autonomous cleaner 100 may move in a front and rear direction and a left and right direction and turn by the wheel unit 111.

Referring to FIG. 3, the wheel unit 111 includes a main-wheel 111a and a sub-wheel 111b.

The main-wheels 111a are respectively arranged on both sides of the cleaner body 110, and are rotatable in one direction or in the other direction in response to a control signal of the controller. The main-wheels 111a may be driven independently of each other. For example, the main-wheels 111a may be driven by different motors, respectively. Alternatively, the main-wheels 111a may be driven by a plurality of different shafts arranged in one motor, respectively.

The sub-wheel 111b supports the cleaner body 110 together with the main-wheel 111a, and assists the travel of the autonomous cleaner 100 by the main-wheel 111a. Such sub-wheel 111b may also be disposed on the cleaning unit 120 to be described later.

The controller controls driving of the wheel unit 111, which causes the autonomous cleaner 100 to autonomously travel on the floor.

In one example, the cleaner body 110 is equipped with a battery (not shown) that supplies power to the autonomous cleaner 100. The battery is rechargeable and detachable from a bottom face of the cleaner body 110.

In FIG. 1, the cleaning unit 120 may be disposed in a form of protruding from one side of the cleaner body 110, and may inhale air containing the dust or mop. The one side may be a side where the cleaner body 110 travels in a forward direction F, that is, a front side of the cleaner body 110.

In this drawing, it is shown that the cleaning unit 120 has a shape protruding from the one side of the cleaner body 110 in the forward direction and both the left and right directions. Specifically, a front end of the cleaning unit 120 is disposed at a position forwardly spaced apart from the one side of the cleaner body 110. In addition, left and right ends of the cleaning unit 120 are arranged at positions spaced apart from the one side of the cleaner body 110 in the left and right directions, respectively.

As the cleaner body 110 is formed in a circular shape, and both sides of a rear end of the cleaning unit 120 respectively protrude from the cleaner body 110 in the left and right directions, an empty space, that is, a gap may be defined between the cleaner body 110 and the cleaning unit 120. The empty space is a space defined between left and right ends of the cleaner body 110 and left and right ends of the cleaning unit 120, and has a shape recessed inwardly of the autonomous cleaner 100.

When an obstacle is caught in the empty space, a problem that the autonomous cleaner 100 is not able to move because of the obstacle. In order to prevent this, a cover 129 may be disposed to cover at least a portion of the empty space.

The cover 129 may be disposed on the cleaner body 110 or the cleaning unit 120. In this embodiment, it is shown that the cover 129 protrudes from each of both sides of the rear end of the cleaning unit 120 and covers an outer circumferential face of the cleaner body 110.

The cover 129 is disposed to fill at least a portion of the empty space, that is, the empty space defined between the cleaner body 110 and the cleaning unit 120. Therefore, a structure in which the obstacle may be prevented from being caught in the empty space, or which may be easily separated from the obstacle even when the obstacle is caught in the empty space may be implemented.

The cover 129 protruding from the cleaning unit 120 may be supported on the outer circumferential face of the cleaner body 110.

When the cover 129 protrudes from the cleaner body 110, the cover 129 may be supported on a rear face of the cleaning unit 120. Based on the structure, when the cleaning unit 120 collides with the obstacle, impact may be partially transmitted to the cleaner body 110, so that the impact may be dispersed.

The cleaning unit 120 may be detachably coupled to the cleaner body 110. When the cleaning unit 120 is separated from the cleaner body 110, in replacement of the separated cleaning unit 120, a mop module (not shown) may be detachably coupled to the cleaner body 110.

Therefore, when a user wants to remove the dust on the floor, the user may mount the cleaning unit 120 on the cleaner body 110. Further, when the user wants to mop the floor, the user may install the mop module on the cleaner body 110.

When the cleaning unit 120 is mounted on the cleaner body 110, the mounting may be guided by the cover 129 described above. That is, as the cover 129 is disposed to cover the outer circumferential face of the cleaner body 110, a relative position of the cleaning unit 120 with respect to the cleaner body 110 may be determined.

The cleaning unit 120 may be equipped with a castor 123. The castor 123 assists the travel of the autonomous cleaner 100 and supports the autonomous cleaner 100.

The sensing unit 130 is disposed on the cleaner body 110. As illustrated, the sensing unit 130 may be disposed on one side of the cleaner body 110 where the cleaning unit 120 is located, that is, a front side of the cleaner body 110.

The sensing unit 130 may be disposed to overlap the cleaning unit 120 in an up and down direction of the cleaner body 110. The sensing unit 130 is disposed above the cleaning unit 120 to sense an obstacle or a terrain feature in the front such that the cleaning unit 120 positioned at a frontmost portion of the autonomous cleaner 100 does not collide with the obstacle.

The sensing unit 130 may be configured to additionally perform a sensing function other than such sensing function.

As an example, the sensing unit 130 may include a camera for acquiring an image of a periphery. The camera may include a lens and an image sensor. Moreover, the camera converts the image of the periphery of the cleaner body 110 into an electrical signal that may be processed by the controller. For example, the camera may transmit an electrical signal corresponding to an image of an upper portion to the controller. The electrical signal corresponding to the image of the upper portion may be used by the controller to detect a position of the cleaner body 110.

Moreover, the sensing unit 130 may sense an obstacle such as a wall, furniture, a cliff, and the like on a traveling face or a traveling route of the autonomous cleaner 100. Moreover, the sensing unit 130 may sense a presence of a docking device that performs battery charging. Moreover, the sensing unit 130 may sense ceiling information and map a traveling zone or a cleaning zone of the autonomous cleaner 100.

The dust collection vessel 140 that separates and collects the dust in the inhaled air is detachably coupled to the cleaner body 110.

Moreover, a dust collection vessel cover 150 that covers the dust collection vessel 140 is disposed on the dust collection vessel 140. In one embodiment, the dust collection vessel cover 150 may be hinged to the cleaner body 110 and pivot with respect to the cleaner body 110. The dust collection vessel cover 150 may be fixed to the dust collection vessel 140 or the cleaner body 110, and may be remained in a state of covering a top face of the dust collection vessel 140. In the state in which the dust collection vessel cover 150 is disposed to cover the top face of the dust collection vessel 140, the dust collection vessel cover 150 may prevent the dust collection vessel 140 from being separated from the cleaner body 110.

The dust collection vessel 140 is formed such that a portion of the dust collection vessel 140 is accommodated in a dust collection vessel receiving portion, but the remaining portion of the dust collection vessel 140 protrudes rearwardly of the cleaner body 110 (i.e., in a reverse direction R opposite to the forward direction F).

The dust collection vessel 140 is formed with an inlet through which the air containing the dust is introduced and an outlet through which the separated dust is discharged. When the dust collection vessel 140 is mounted in the cleaner body 110, the inlet and the outlet are in communication with each other through an opening 155 defined in an inner wall of the body 110. Accordingly, an inhale channel and an exhaust channel inside the cleaner body 110 may be formed.

Based on such connection relationship, the air containing the dust introduced through the cleaning unit 120 enters the dust collection vessel 140 through the inhale channel inside the cleaner body 110. The air and the dust are separated from each other through a filter or a cyclone of the dust collection vessel 140. The dust is collected in the dust collection vessel 140, and the air is discharged from the dust collection vessel 140, then flows along the exhaust channel inside the cleaner body 110, and then is finally discharged to the outside through the outlet.

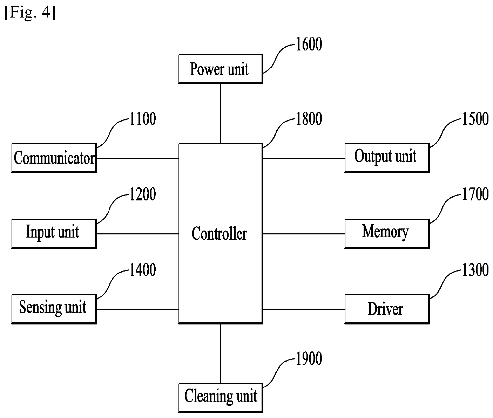

In FIG. 4 below, an embodiment associated with the components of the autonomous cleaner 100 will be described.

The autonomous cleaner 100 or the mobile robot according to an embodiment of the present disclosure may include at least one of a communicator 1100, an input unit 1200, a driver 1300, a sensing unit 1400, an output unit 1500, a power unit 1600, a memory 1700, a controller 1800, and a cleaning unit 1900, or a combination thereof.

In this connection, the components illustrated in FIG. 4 are not essential, so that an autonomous cleaner having more or fewer components may be implemented. Moreover, as described above, the plurality of autonomous cleaners described in the present disclosure may include only some of the components to be described below in common. That is, the plurality of autonomous cleaners may be composed of different components.

Hereinafter, each component will be described.

First, the power unit 1600 is provided with a battery that may be charged by an external commercial power supply to supply power into the mobile robot. The power unit 1600 may supply driving power to each of the components included in the mobile robot, thereby supplying operating power required for the mobile robot to travel or perform a specific function.

In this connection, the controller 1800 senses a remaining battery capacity. When the remaining battery capacity is insufficient, the controller 1800 controls the mobile robot to move to a charging device connected to the external commercial power supply, so that the battery may be charged by receiving a charging current from the charging device. The battery is connected to a battery sensing unit, so that the battery level and a charging state may be transmitted to the controller 1800. The output unit 1500 may display the remaining battery capacity by the controller.

The battery may be located at a lower center of the autonomous cleaner, or may be located on one of the left and right sides of the autonomous cleaner. In the latter case, the mobile robot may further include a balance weight to eliminate weight bias of the battery.

The controller 1800 serves to process information based on an artificial intelligence technology, which may include at least one module that performs at least one of information learning, information inference, information perception, and natural language processing.

The controller 1800 may use a machine learning technology to perform at least one of learning, inference, and processing on vast amounts of information (bigdata), such as information stored in the cleaner, information on an environment around a mobile terminal, information stored in an external communicable storage. In addition, the controller 1800 may predict (or infer) at least one executable operation of the cleaner using information learned using the machine learning technology, and control the cleaner to execute the most feasible operation among the at least one predicted operations.

The machine learning technology is a technology of collecting and learning large-scale information based on at least one algorithm, and determining and predicting information based on the learned information. The information learning is an operation of identifying characteristics, rules, and determination criteria of the information, quantifying a relationship between the information, and predicting new data using a quantified pattern.

The algorithm used by the machine learning technology may be an algorithm based on statistics. For example, the algorithm may be a decision tree that uses a tree structure shape as a prediction model, an artificial neural network that mimics a structure and a function of a neural network of an organism, genetic programming based on an evolution algorithm of the organism, clustering that distributes observed examples into a subset called clusters, a Monte Carlo method that stochastically computes function values through randomly extracted random numbers, and the like.

As a field of the machine learning technology, a deep learning technology is a technology that performs at least one of learning, determining, and processing of information using an artificial neural network (deep neural network, DNN) algorithm. The artificial neural network (DNN) may have a structure of connecting layers with each other and transferring data between the layers. Such deep learning technology may learn vast amounts of information through the artificial neural network (DNN) using a graphic processing unit (GPU) optimized for parallel computation.

The controller 1800 may be equipped with a learning engine that uses training data stored in an external server or memory and detects features for recognizing a predetermined object. In this connection, the features for recognizing the object may include a size, a shape, a shadow, and the like of the object.

Specifically, when the controller 1800 inputs some of the images acquired through the camera disposed on the cleaner to the learning engine, the learning engine may recognize at least one object or living body contained in the input images.

As such, when applying the learning engine to the travel of the cleaner, the controller 1800 may recognize whether an obstacle, such as a chair leg, an electric fan, or a balcony gap of a certain shape, that obstructs the travel of the cleaner exists around the cleaner, thereby increasing efficiency and reliability of the travel of the cleaner.

In one example, the learning engine described above may be mounted on the controller 1800, and may be mounted the external server. When the learning engine is mounted on the external server, the controller 1800 may control the communicator 1100 to transmit at least one image, which is an object to be analyzed, to the external server.

The external server may recognize the at least one object or living body contained in the image by inputting the image received from the cleaner to the learning engine. In addition, the external server may transmit information associated with the recognition result back to the cleaner. In this connection, the information associated with the recognition result may include the number of objects contained in the image, which is the object to be analyzed, and information associated with a name of each object.

In one example, the driver 1300 may be equipped with a motor, and may turn or linearly move the body by rotating the left and right main-wheels in the both directions by driving the motor. In this connection, the left and right main-wheels may move independently of each other. The driver 1300 may move the body of the mobile robot in the front and rear direction and in the left and right direction, and in a curved manner, or may turn the body of the mobile robot at the same place.

In one example, the input unit 1200 receives various control commands for the autonomous cleaner from the user. The input unit 1200 may include at least one button. For example, the input unit 1200 may include an identification button, a setting button, and the like. The identification button is a button for receiving a command for identifying sensing information, obstacle information, position information, and map information from the user, and the setting button is a button for receiving a command for setting the information from the user.

Moreover, the input unit 1200 may include an input resetting button for canceling a previous user input and receiving a user input again, a delete button for deleting a preset user input, a button for setting or changing an operation mode, a button for receiving a command to return to the charging device, and the like.

Moreover, the input unit 1200 includes a hard key, a soft key, a touch pad, and the like, which may be installed on at an upper portion of the mobile robot. In addition, the input unit 1200 may have a form of a touch screen together with the output unit 1500.

In one example, the output unit 1500 may be installed at the upper portion of the mobile robot. In one example, an installation position or an installation shape may vary. For example, the output unit 1500 may display a battery state, a travel scheme, and the like on a screen.

Moreover, the output unit 1500 may output mobile robot interior status information detected by the sensing unit 1400, for example, a current status of each component included in the mobile robot. In addition, the output unit 1500 may display external status information, the obstacle information, the position information, the map information, and the like detected by the sensing unit 1400 on the screen. The output unit 1500 may be formed of one of a light emitting diode (LED), a liquid crystal display (LCD), a plasma display panel, and an organic light emitting diode (OLED).

The output unit 1500 may further include sound output means for acoustically outputting an operation process or an operation result of the mobile robot performed by the controller 1800. For example, the output unit 1500 may output a warning sound to the outside in response to a warning signal generated by the controller 1800.

In this connection, the sound output means (not shown) may be means for outputting sound such as a beeper, a speaker, and the like. The output unit 1500 may output the sound to the outside through the sound output means using audio data, message data, or the like having a predetermined pattern stored in the memory 1700.

Accordingly, the mobile robot according to an embodiment of the present disclosure may output environment information on a travel region on the screen or output the environment information as a sound through the output unit 1500. According to another embodiment, the mobile robot may transmit the map information or the environment information to the terminal device through the communicator 1100 such that the terminal device outputs the screen or the sound to be output through the output unit 1500.

The memory 1700 stores a control program that controls or drives the autonomous cleaner and data from the control program. The memory 1700 may store audio information, image information, the obstacle information, the position information, the map information, and the like. Further, the memory 1700 may store information associated with a travel pattern.

The memory 1700 mainly uses a non-volatile memory. In this connection, the non-volatile memory (NVM, NVRAM) is a storage device that may keep stored information even when power is not supplied. For example, the non-volatile memory may be a ROM, a flash memory, a magnetic computer storage device (e.g., a hard disk, a diskette drive, and a magnetic tape), an optical disk drive, a magnetic RAM, a PRAM, and the like.

Further, a map for the travel zone may be stored in the memory 1700. The map may be input by an external terminal, a server, and the like capable of exchanging information through wired or wireless communication with the autonomous cleaner 100, or may be created by the autonomous cleaner 100 while traveling.

Positions of rooms in the travel zone may be indicated in the map. In addition, a current position of the autonomous cleaner 100 may be indicated on the map, and the current position of the autonomous cleaner 100 on the map may be updated during the travel process.

The memory 1700 may store cleaning history information. Such cleaning history information may be generated each time the cleaning is performed.

The map for the travel zone stored in the memory 1700, which is data that stores predetermined information of the travel zone in a predetermined format, may be a navigation map used for the travel during the cleaning, a simultaneous localization and mapping (SLAM) map used for position recognition, a learning map that, when hitting the obstacle, stores corresponding information and uses the stored information for learning cleaning, a global position map used for global position recognition, an obstacle recognition map on which information about the recognized obstacle is recorded, and the like.

The map may mean a node map containing a plurality of nodes. In this connection, the node means data representing a position on the map corresponding to a point that is a position in the travel zone.

In one example, the sensing unit 1400 may include at least one of an external signal sensor, a front sensor, a cliff sensor, a two-dimensional camera sensor, and a three-dimensional camera sensor.

The external signal sensor may sense an external signal of the mobile robot. The external signal sensor may be, for example, an infrared ray sensor, an ultrasonic sensor, a radio frequency sensor (RF sensor), and the like.

The mobile robot may receive a guide signal generated by the charging device using the external signal sensor and identify a position and a direction of the charging device. In this connection, the charging device may transmit the guide signal indicating the direction and a distance such that the mobile robot may return. That is, the mobile robot may receive the signal from the charging device to determine the current position, and set a moving direction to return to the charging device.

In one example, the front sensors may be installed at certain spacings along a front face of the mobile robot, specifically along an outer circumferential side face of the mobile robot. The front sensor is located on at least one side face of the mobile robot, and is for sensing an obstacle ahead. The front sensor may sense an object, particularly an obstacle, present in the moving direction of the mobile robot and transmit the detection information to the controller 1800. That is, the front sensor may sense a protrusion, a fixture in the house, furniture, a wall face, a wall edge, and the like on a moving route of the mobile robot, and transmit the sensing information to the controller 1800.

The front sensor may be, for example, an infrared ray sensor, an ultrasonic sensor, an RF sensor, a geomagnetic sensor, and the like. The mobile robot may use one type of sensor or, when it is necessary, at least two types of sensors together as the front sensor.

As an example, the ultrasonic sensor may be mainly used to sense an obstacle at a long distance. The ultrasonic sensor has a transmitter and a receiver. Thus, the controller 1800 may determine whether the obstacle is present based on whether a ultrasonic wave emitted through the transmitter is reflected by the obstacle and the like and then received through the receiver, and calculate a distance from the obstacle using an ultrasonic wave emission time and an ultrasonic wave reception time.

Moreover, the controller 1800 may detect information associated with a size of the obstacle by comparing the ultrasound wave emitted from the transmitter and the ultrasound waves received through the receiver. For example, the controller 1800 may determine that the more ultrasonic waves are received in the receiver, the larger the obstacle size.

In one embodiment, a plurality of (e.g., five) ultrasonic sensors may be installed on side portions of the front face of the mobile robot along the outer circumferential face. In this connection, the ultrasonic sensor may be preferably installed on the front face of the mobile robot in a manner in which the transmitters and the receivers are alternately arranged.

That is, the transmitters may be arranged on left and right portions spaced apart from a center of the front face of the body. One or more transmitters may be arranged between the receivers to define a reception region of the ultrasonic signal reflected from the obstacle and the like. With such arrangement, the reception region may be expanded while reducing the number of sensors. A transmission angle of the ultrasonic wave may maintain an angle within a range that does not affect different signals to prevent a crosstalk phenomenon. Moreover, reception sensitivities of the receivers may be set differently from each other.

Moreover, the ultrasonic sensor may be installed upward by a certain angle such that the ultrasonic wave transmitted from the ultrasonic sensor is output upward. In this connection, a predetermined blocking member may be further included to prevent the ultrasonic wave from being emitted downward.

In one example, as described above, the front sensor may use at least two types of sensors together. Accordingly, the front sensor may use one of the infrared ray sensor, the ultrasonic sensor, the RF sensor, and the like.

As an example, the front sensor may include the infrared ray sensor as another type of sensor in addition to the ultrasonic sensor.

The infrared ray sensor may be installed on the outer circumferential face of the mobile robot together with the ultrasonic sensor. The infrared ray sensor may also sense an obstacle present in the front or the side and transmit obstacle information to the controller 1800. That is, the infrared ray sensor may sense the protrusion, the fixture in the house, the furniture, the wall face, the wall edge, and the like on the moving route of the mobile robot, and transmit the sensing information to the controller 1800. Therefore, the mobile robot may move within a specific region without collision of the body and the obstacle.

In one example, the cliff sensor may sense an obstacle on the floor that supports the body of the mobile robot mainly using various types of optical sensors.

That is, the cliff sensor is installed on a rear face of the mobile robot on the floor. In one example, the cliff sensor may be installed at a different position depending on a type of the mobile robot. The cliff sensor is located on the rear face of the mobile robot and is for sensing the obstacle on the floor. The cliff sensor may be an infrared ray sensor, an ultrasonic sensor, a RF sensor, a position sensitive detector (PSD) sensor, and the like equipped with a light emitter and a light receiver like the obstacle sensor.

For example, one of the cliff sensors may be installed at a front portion of the mobile robot, and the other two cliff sensors may be installed at a relatively rear portion thereof.

For example, the cliff sensor may be the PSD sensor, but may be composed of a plurality of different types of sensors.

The PSD sensor detects positions at short and long distances of incident light by one p-n junction using a semiconductor surface resistance. The PSD sensor includes a one-dimensional PSD sensor that detects light in only one axial direction, and a two-dimensional PSD sensor that may detect a position of light on a plane. Both may have a pin photodiode structure. The PSD sensor is a type of infrared ray sensor. The PSD sensor uses the infrared ray to measure a distance by transmitting the infrared ray and then measuring an angle of the infrared ray reflected from the obstacle and returned. That is, the PSD sensor calculates the distance from the obstacle using a triangulation method.

The PSD sensor includes a light emitter that emits the infrared ray on the obstacle, and a light receiver that receives the infrared ray reflected from the obstacle, and is generally formed in a module shape. When the obstacle is sensed using the PSD sensor, a stable measurement may be obtained regardless of a reflectance of the obstacle and a color difference.

The controller 1800 may measure an infrared ray angle between an emission signal of the infrared ray emitted by the cliff sensor toward the ground and a reflection signal of the infrared ray reflected by the obstacle and received to sense a cliff and analyze a depth of the cliff.

In one example, the controller 1800 may determine whether to pass the cliff based on a state of the ground of the cliff sensed using the cliff sensor, and may determine whether to pass the cliff based on the determination result. For example, the controller 1800 determines the existence of the cliff and the depth of the cliff through the cliff sensor, and then passes the cliff only when the reflection signal is detected through the cliff sensor.

As another example, the controller 1800 may determine a lifting phenomenon of the mobile robot using the cliff sensor.

In one example, the two-dimensional camera sensor is disposed on one face of the mobile robot, and acquires the image information associated with the periphery of the body while moving.

An optical flow sensor converts a lower portion image input from the image sensor disposed in the sensing unit to generate image data in a predetermined format. The generated image data may be stored in the memory 1700.

Moreover, at least one light source may be installed adjacent to the optical flow sensor. The at least one light source irradiates light to a predetermined region on the floor face captured by the image sensor. That is, when the mobile robot moves on the specific region along the floor face, a constant distance is maintained between the image sensor and the floor face when the floor face is flat. On the other hand, when the mobile robot moves on a floor face of a non-uniform face, the image sensor and the floor face are away from each other by a distance equal to or greater than a certain distance due to an irregularity of the floor face and the obstacle. In this connection, the at least one light source may be controlled by the controller 1800 to control an amount of light being irradiated. The light source may be a light emitting device that may adjust the amount of light, for example, a light emitting diode (LED) and the like.

Using the optical flow sensor, the controller 1800 may detect the position of the mobile robot regardless of sliding of the mobile robot. The controller 1800 may calculate the moving distance and the moving direction by comparing and analyzing the image data captured by the optical flow sensor over time, and may calculate the position of the mobile robot based on the calculated moving distance and moving direction. Using the image information on the lower portion of the mobile robot using the optical flow sensor, the controller 1800 may correct the sliding robustly for the position of the mobile robot calculated by other means.

The 3-dimensional camera sensor is attached to one face or a portion of the body of the mobile robot to generate 3-dimensional coordinate information associated with the periphery of the body.

That is, the 3-dimensional camera sensor may be a 3-dimensional depth camera (3D depth camera) that calculates a distance between the mobile robot and an imaging target.

Specifically, the 3-dimensional camera sensor may image a 2-dimensional image associated with the periphery of the body, and may generate a plurality of 3-dimensional coordinate information corresponding to the captured 2-dimensional image.

In one embodiment, the 3-dimensional camera sensor may be formed in a stereo vision scheme in which at least two cameras that acquire the existing 2-dimensional images are arranged and at least two images respectively acquired from the at least two cameras are combined with each other to generate the 3-dimensional coordinate information.

Specifically, the 3-dimensional camera sensor according to the embodiment may include a first pattern irradiating unit that irradiates light of a first pattern downward toward the front of the body, a second pattern irradiating unit that irradiates light of a second pattern upward toward the front of the body, and an image acquisition unit that acquires an image of the front of the body. Thus, the image acquisition unit may acquire an image of a region into which the light of the first pattern and the light of the second pattern are incident.

In another embodiment, the 3-dimensional camera sensor is equipped with an infrared pattern emitter that irradiates an infrared pattern together with a single camera. A distance between the 3-dimensional camera sensor and the imaging target may be measured by capturing a shape of the infrared pattern irradiated from the infrared pattern emitter projected onto the imaging target. Such 3-dimensional camera sensor may be a 3-dimensional camera sensor of an infrared (IR) scheme.

In another embodiment, the 3-dimensional camera sensor is equipped with a light emitter that emits light together with the single camera. The 3-dimensional camera sensor may receive a portion reflected from the imaging target of laser emitted from the light emitter and analyze the received laser to measure the distance between the 3-dimensional camera sensor and the imaging target. Such 3-dimensional camera sensor may be a 3-dimensional camera sensor of a time of flight (TOF) scheme.

Specifically, the 3-dimensional camera sensor as above is configured to irradiate laser extending in at least one direction. In one example, the 3-dimensional camera sensor may include first and second lasers. The first laser may irradiate laser in a shape in which straight lines intersect each other, and the second laser may irradiate laser in a shape of a single straight line. Thus, the bottommost laser is used to sense an obstacle at the lower portion, the topmost laser is used to sense an obstacle at the upper portion, and middle laser between the bottommost laser and the topmost laser is used to sense an obstacle at a middle portion.

While the autonomous cleaner 100 travels, the sensing unit 1400 acquires the images of the periphery of the autonomous cleaner 100. Hereinafter, the image acquired by the sensing unit 1400 is defined as an 'acquired image'.

The acquired image contains various features such as lights positioned on a ceiling, edges, corners, blobs, and ridges.

The controller 1800 detects the feature from each of the acquired images, and calculates a descriptor based on each feature point. The descriptor refers to data in a predetermined format for indicating the feature point, and refers to mathematical data in a format in which a distance or a similarity between the descriptors may be calculated. For example, the descriptor may be data in a format of an n-dimensional vector (n is a natural number) or of a matrix.

The controller 1800 may classify at least one descriptor into a plurality of groups for each acquired image based on a predetermined sub-classification rule based on descriptor information obtained through an acquired image of each position, and convert each of descriptors included in the same group into a sub-representative descriptor based on a predetermined sub-representative rule.

In another example, the controller 1800 may classify all descriptors collected from acquired images in a predetermined zone, such as a room, into a plurality of groups based on the predetermined sub-classification rule, and convert each of descriptors included in the same group into the sub-representative descriptor based on the predetermined sub-representative rule.

The controller 1800 may obtain a feature distribution of each position through such a process. The feature distribution of each position may be represented as a histogram or an n-dimensional vector. In another example, the controller 1800 may estimate the unknown current position based on the descriptor calculated from each feature point without through the predetermined sub-classification rule and the predetermined sub-representative rule.

In addition, when the current position of the autonomous cleaner 100 becomes unknown for reasons such as position leap and the like, the current position may be estimated based on data such as a previously stored descriptor, the sub-representative descriptor, or the like.

The autonomous cleaner 100 acquires the acquired image through the sensing unit 1400 at the unknown current position. The various features, such as the lights positioned on the ceiling, the edges, the corners, the blobs, the ridges, and the like are identified through the image.

The controller 1800 detects the features from the acquired image and calculates the descriptors.

The controller 1800 may convert at least one descriptor information obtained through the acquired image of the unknown current position into position information (e.g., the feature distribution of each position), which is to be compared, and comparable information (a sub-recognized feature distribution) based on a predetermined sub-conversion rule.

The feature distribution of each position may be compared with each recognized feature distribution based on a predetermined sub-comparison rule to calculate a similarity therebetween. The similarity (a probability) may be calculated for each position, and a position at which the greatest probability is calculated may be determined as the current position.

As such, the controller 1800 may distinguish the travel zone and create a map composed of a plurality of regions, or may recognize the current position of the autonomous cleaner 100 based on a previously stored map.

In one example, the communicator 1100 is connected to a terminal device and/or another device located in a specific region (herein, interchangeable with a term of "home appliance") in a scheme of one of wired, wireless, or satellite communication schemes, and transmits/receives signals and data thereto/therefrom.

The communicator 1100 may transmit and receive the data to and from another device located in the specific region. In this connection, another device may be any device that may be connected to a network to transmit and receive the data. For example, said another device may be a device such as an air conditioner, a heater, an air purifier, a lamp, a TV, a vehicle, and the like. Moreover, said another device may be a device that controls a door, a window, a water valve, a gas valve, and the like. Moreover, said another device may be a sensor that senses a temperature, a humidity, an air pressure, gas, and the like.

Moreover, the communicator 1100 may be in communication with another autonomous cleaners 100 located within the specific region or within a certain range.

When the map is created, the controller 1800 may transmit the created map to the external terminal, the server, and the like through the communicator 1100, and may store the created map in a memory 1100 of its own. In addition, as described above, the controller 1800 may store the map in the memory 1100 when the map is received from the external terminal, the server, and the like.

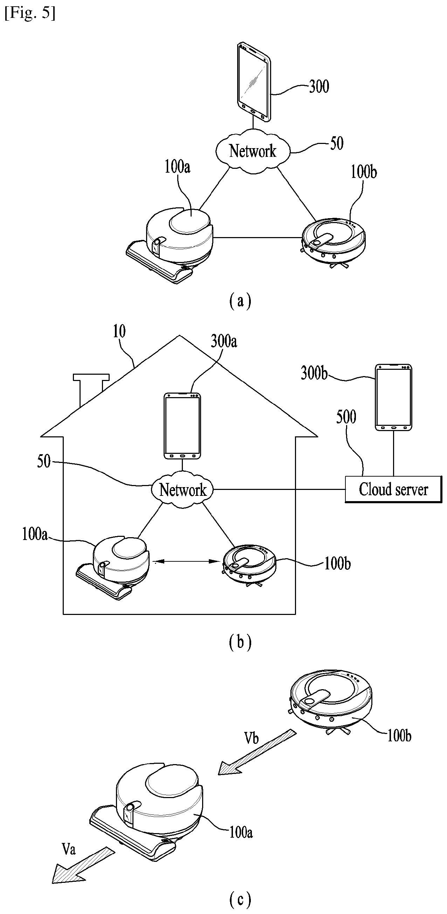

Referring to (a) and (b) in FIG. 5, a first autonomous cleaner 100a and a second autonomous cleaner 100b may exchange data with each other through network communication 50. Moreover, the first autonomous cleaner 100a and/or the second autonomous cleaner 100b may perform a cleaning-related operation or a corresponding operation by a control command received from a terminal 300 through the network communication 50 or another communication.

That is, although not shown, the plurality of autonomous cleaners 100a and 100b may be in communication with the terminal 300 through first network communication, and may be in communication with each other through second network communication.

In this connection, the network communication 50 may mean short-distance communication using at least one of wireless communication technologies such as a wireless LAN (WLAN), a wireless personal area network (WPAN), a wireless-fidelity (Wi-Fi), a wireless fidelity (Wi-Fi) direct, a digital living network alliance (DLNA), a wireless broadband (WiBro), a world interoperability for microwave access (WiMAX), a Zigbee, a Z-wave, a Blue-Tooth, a radio frequency identification (RFID), an infrared data association (IrDA), a ultrawide-band (UWB), a wireless universal serial bus (Wireless USB), and the like.

The illustrated network communication 50 may vary depending on a communication scheme of the autonomous cleaners to be communicated with each other.

(a) in FIG. 5, the first autonomous cleaner 100a and/or the second autonomous cleaner 100b may provide information respectively sensed through respective sensing units to the terminal 300 through the network communication 50. Moreover, the terminal 300 may transmit a control command generated based on the received information to the first autonomous cleaner 100a and/or the second autonomous cleaner 100b through the network communication 50.

Moreover, (a) in FIG. 5, a communicator of the first autonomous cleaner 100a and a communicator of the second autonomous cleaner 100b may be in wireless communication with each other directly or may be in wireless communication with each other indirectly through another router (not shown) and the like to identify information about a travel status, information about positions thereof, and the like.

In one example, the second autonomous cleaner 100b may perform travel and cleaning operations in response to a control command received from the first autonomous cleaner 100a. In this case, it may be said that the first autonomous cleaner 100a acts as a master cleaner and the second autonomous cleaner 100b acts as a slave cleaner. Alternatively, it may be said that the second autonomous cleaner 100b follows the first autonomous cleaner 100a. Alternatively, in some cases, it may be said that the first autonomous cleaner 100a and the second autonomous cleaner 100b cooperate with each other.

(b) in FIG. 5, a system including the plurality of cleaners 100a and 100b performing the autonomous travel according to an embodiment of the present disclosure will be described below.

Referring to (b) in FIG. 5, the cleaning system according to an embodiment of the present disclosure may include the plurality of cleaners 100a and 100b performing the autonomous travel, the network 50, a server 500, and a plurality of terminals 300a and 300b.

Among the components, the plurality of cleaners 100a and 100b, the network 50, and at least one terminal 300a may be placed in a building 10, and another terminal 300b and the server 500 may be located outside.

The plurality of cleaners 100a and 100b are cleaners that travel by themselves and perform the cleaning, which may perform the autonomous travel and autonomous cleaning. In addition to the travel function and the cleaning function, each of the plurality of cleaners 100a and 100b may include the communicator 1100 therein.

Moreover, the plurality of cleaners 100a and 100b, the server 500, and the plurality of terminals 300a and 300b may be connected to each other through the network 50 to exchange data with each other. To this end, although not shown, a wireless router such as an access point (AP) device and the like may be further included. In this case, the terminal 300a located in an internal network 10 may be connected to at least one of the plurality of cleaners 100a and 100b through the AP device to perform monitoring, remote control, and the like for the cleaner. Moreover, the terminal 300b located in an external network may also be connected to at least one of the plurality of cleaners 100a and 100b through the AP device to perform the monitoring, the remote control, and the like for the cleaner.

The server 500 may be in direct wireless communication with at least one of the plurality of cleaners 100a and 100b through the mobile terminal 300b. Alternatively, the server 500 may be connected to at least one of the plurality of cleaners 100a and 100b without through the mobile terminal 300b.

The server 500 may include a programmable processor, and may have various algorithms. For example, the server 500 may have algorithms associated with performing machine learning and/or data mining. For example, the server 500 may include a voice recognition algorithm. In this case, when receiving voice data, the server 500 may convert the received voice data into data in a text format and output the data in the text format.

The server 500 may store firmware information, traveling information (course information and the like) for the plurality of cleaners 100a and 100b, and register product information for the plurality of cleaners 100a and 100b. For example, the server 500 may be a server operated by a cleaner manufacturer or a server operated by a published application store operator.

In another example, the server 500 may be a home server that is provided in the internal network 10 to store status information about home appliances or to store content shared by the home appliances. When the server 500 is the home server, the server 500 may store information associated with the foreign substance, for example, an image of the foreign substance and the like.

In one example, the plurality of cleaners 100a and 100b may be wirelessly connected directly to each other through the Zigbee, the Z-wave, the Blue-Tooth, the ultra-wide band, and the like. In this case, the plurality of cleaners 100a and 100b may exchange the information about positions thereof, the travel information, and the like with each other.

In this connection, one of the plurality of cleaners 100a and 100b may become a master cleaner 100a and the other may become a slave cleaner 100b.

In this case, the first cleaner 100a may control travel and cleaning of the second cleaner 100b. In addition, the second cleaner 100b may perform the travel and the cleaning while following the first cleaner 100a. In this connection, the fact that the the second cleaner 100b follows the first cleaner 100a means that the second cleaner 100b travels and cleans by following the first cleaner 100a while maintaining a proper distance from the first cleaner 100a.

Referring to (c) in FIG. 5, the first cleaner 100a controls the second cleaner 100b such that the second cleaner 100b follows the first cleaner 100a.

To this end, the first cleaner 100a and the second cleaner 100b should be present in a specific region capable of mutual communication, and the second cleaner 100b should at least identify a relative position of the first cleaner 100a.

For example, the communicator of the first cleaner 100a and the communicator of the second cleaner 100b may exchange an IR signal, an ultrasonic signal, a carrier wave frequency, an impulse signal, and the like with each other, and analyze the same through the triangulation and the like to calculate displacements of the first cleaner 100a and the second cleaner 100b, thereby identifying relative positions of the first cleaner 100a and the second cleaner 100b. However, without being limited to such scheme, the communicator of the first cleaner 100a and the communicator of the second cleaner 100b may identify the relative positions of the first cleaner 100a and the second cleaner 100b through the triangulation and the like using one of the various wireless communication technologies described above.

When the first cleaner 100a recognizes the position thereof relative to the position of the second cleaner 100b, the second cleaner 100b may be controlled based on map information stored in the first cleaner 100a or map information stored in the server or the terminal. Moreover, the second cleaner 100b may share information on an obstacle sensed by the first cleaner 100a. Moreover, the second cleaner 100b may perform an operation by a control command (e.g., a control command associated with travel such as a traveling direction, a travel velocity, stop, and the like) received from the first cleaner 100a.

Specifically, the second cleaner 100b performs the cleaning while traveling along a traveling route of the first cleaner 100a. However, traveling directions of the first cleaner 100a and the second cleaner 100b do not always coincide. For example, when the first cleaner 100a linearly moves and turns in up/down/left/right direction, the second cleaner 100b linearly moves and turns in the up/down/left/right direction after a predetermined time, so that the traveling directions thereof may be different from each other.

Moreover, a travel velocity Va of the first cleaner 100a and a travel velocity Vb of the second cleaner 100b may be different from each other.

The first cleaner 100a may control the travel velocity Vb of the second cleaner 100b to vary in consideration of a distance at which the communication of the first cleaner 100a and the second cleaner 100b is possible. For example, when the first cleaner 100a and the second cleaner 100b are away from each other by a distance equal to or greater than a certain distance, the first cleaner 100a may control the travel velocity Vb of the second cleaner 100b to be increased than before. In addition, when the distance between the first cleaner 100a and the second cleaner 100b is equal to or less than a certain distance, the travel velocity Vb of the second cleaner 100b may be controlled to be decreased than before or to become zero for a predetermined time. Therefore, the second cleaner 100b may perform the cleaning while continuously following the first cleaner 100a.

In the present disclosure, sensors for reception may be respectively placed at rear and front portions of the first cleaner 100a, so that a controller of the first cleaner 100a may recognize a reception direction of an optical signal received from the second cleaner 100b in a manner of distinguishing the reception direction into a front direction and a rear direction. To this end, a UWB module may be disposed at the rear portion of the first cleaner 100a, and the UWB module or a plurality of optical sensors may be arranged at the front portion of the first cleaner 100a spaced apart from each other. The first cleaner 100a may recognize the reception direction of the optical signal received from the second cleaner 100b to determine whether the second cleaner 100b is following the first cleaner 100a at the rear of the first cleaner 100a or is reversed and positioned in front of the first cleaner 100a.

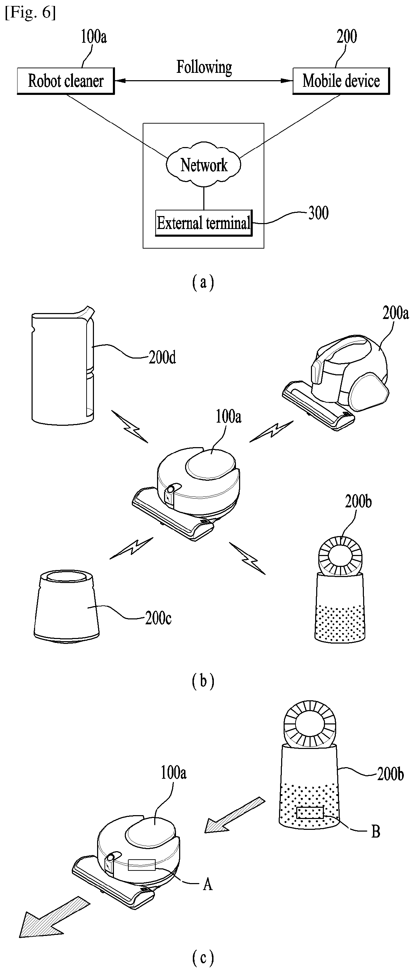

(a) in FIG. 6, (b) in FIG. 6, and (c) in FIG. 6 are a variation of following control between the first cleaner and the second cleaner according to the embodiments of the present disclosure described above. Herein, following control between the first cleaner and a mobile device will be described in detail. The following control herein only means that the mobile device travels while following a moving route of the first cleaner.

Referring to (a) in FIG. 6, the first cleaner 100a may be in communication with the mobile device 200 rather than with the second cleaner, and control following of the mobile device 200.

In this connection, the mobile device 200 may include any electronic device as long as the electronic device has the travel function without having the cleaning function. For example, the mobile device 200 may include all of unlimited various types of home devices or other electronic devices such as a dehumidifier, a humidifier, an air purifier, an air conditioner, a smart TV, an artificial intelligence speaker, a digital imaging devices, and the like.

In addition, the mobile device 200 is sufficient to have the travel function, which may not have a function of sensing an obstacle by itself or a navigation function of traveling to a determined destination.

The first cleaner 100a is a robot cleaner equipped with both the navigation function and the obstacle sensing function, which may control the following of the mobile device 200. The first cleaner 100a may be a dry cleaner or a wet cleaner.

The first cleaner 100a and the mobile device 200 may be in communication with each other through a network (not shown), but may be in communication with each other directly.

In this connection, the communication using the network may be, for example, the WLAN, the WPAN, the Wi-Fi, the Wi-Fi direct, the digital living network alliance (DLNA), the wireless broadband (WiBro), the world interoperability for microwave access (WiMAX), and the like. Further, the direct communication between the first cleaner 100a and the mobile device 200 may be performed using, for example, the ultrawide-band (UWB), the Zigbee, the Z-wave, the Blue-Tooth, the RFID, the infrared data association (IrDA), and the like.

When the first cleaner 100a and the mobile device 200 are in close proximity, the mobile device 200 is able to be set to follow the first cleaner 100a through manipulation on the first cleaner 100a.

When the first cleaner 100a and the mobile device 200 are away from each other, although not shown, the mobile device 200 may be set to follow the first cleaner 100a through manipulation on the external terminal 300 ((a) in FIG. 5).

Specifically, through network communication with the external terminal 300 ((a) in FIG. 5), a following relationship between the first cleaner 100a and the mobile device 200 may be established. In this connection, the external terminal 300 is an electronic device capable of wired/wireless communication, which may be, for example, a tablet, a smartphone, a laptop, and the like. The external terminal 300 may be installed with at least one application related to the following control by the first cleaner 100a (hereinafter, a 'following-related application'). The user may select and register the mobile device 200 to be following-controlled by the first cleaner 100a by executing the following-related application installed in the external terminal 300. When the mobile device 200 to be following-controlled is registered, the external terminal may recognize product information of the mobile device, and such product information may be provided to the first cleaner 100a through the network.

The external terminal 300 may be in communication with the first cleaner 100a and the registered mobile device 200, thereby identifying a position of the first cleaner 100a and a position of the registered mobile device 200. Thereafter, in response to a control signal transmitted from the external terminal 300, the first cleaner 100a travels to the position of the registered mobile device 200 or the registered mobile device 200 moves to the position of the first cleaner 100a. When it is sensed that the relative positions of the first cleaner 100a and the registered mobile device 200 are within the determined following distance described above, the following control of the mobile device 200 by the first cleaner 100a is started from that time point. Thereafter, the following control is performed by direct communication between the first cleaner 100a and the mobile device 200 without intervention of the external terminal 300.

Setting of such following control may be terminated by manipulation of the external terminal 300, or may be automatically terminated as the distance between the first cleaner 100a and the mobile device 200 is equal to or greater than the determined following distance.

The user may change, add, and remove the mobile device 200 to be controlled by the first cleaner 100a by manipulation through the first cleaner 100a or the external terminal 300. For example, referring to (b) in FIG. 6, the first cleaner 100a may perform following control on at least one mobile device 200 among another cleaner 200a or 100b, an air cleaner 200b, a humidifier 200c, and a dehumidifier 200d.

In general, because an original function, a product size, and a travel ability of the mobile device 200 are respectively different from a function, a size, and a travel ability of the first cleaner 100a, it is difficult for the mobile device 200 to follow the traveling route of the first cleaner 100a as it is. For example, there may be an exceptional situation in which it is difficult for the mobile device 200 to follow the traveling route of the first cleaner 100a depending on a travel mode, topographic characteristics of a space, a size of an obstacle, and the like. In consideration of such an exceptional situation, even when the mobile device 200 recognizes the traveling route of the first cleaner 100a, the mobile device 200 may travel by omitting a portion of the traveling route or wait. To this end, the first cleaner 100a may detect whether a current situation corresponds to the above-described exceptional situation, and may cause the mobile device 200 to store data corresponding to the traveling route of the first cleaner 100a in a memory and the like, and then to delete some of the stored data depending on the situation and travel or wait in a travel-stopped state.

(c) in FIG. 6 illustrates an example of following control of the first cleaner 100a and the mobile device 200, for example, the air cleaner 200b with the travel function. The first cleaner 100a and the air cleaner 200b may respectively have communication modules A and B for identifying relative positions thereof. The communication modules A and B may be one of modules that emit and receive the IR signal, the ultrasonic signal, the carrier wave frequency, or the impulse signal. The relative position identification through the communication modules A and B has been described in detail above, so that description will be omitted here. The air purifier 200b receives travel information corresponding to a travel command (e.g., travel change, travel stop, and the like including the travel command, a traveling direction, and a travel velocity) from the first cleaner 100a, travels based on the received travel information, and performs air purification. Accordingly, the air purification may be performed in real time for a cleaning space in which the first cleaner 100a operates. Moreover, because the first cleaner 100a identifies the product information of the mobile device 200, in the exceptional situation, the air cleaner 200b may be controlled to record the travel information of the first cleaner 100a, and to delete some of the information and travel or to wait in the travel-stopped state.

Hereinafter, a method for the plurality of robot cleaners according to an embodiment of the present disclosure to smoothly perform following control will be described in detail with reference to the accompanying drawings.

The first autonomous cleaner 100a according to the present disclosure may be referred to as a first robot cleaner or first cleaner 100a, and the second autonomous cleaner 100b may be referred to as a second robot cleaner or second cleaner 100b.

Moreover, in the present disclosure, the first cleaner 100a may serve as a leading cleaner that travels ahead of the second cleaner 100b, and the second cleaner 100b may serve as a following cleaner that follows the first cleaner 100a.

In the present disclosure, the first cleaner 100a and the second cleaner 100b may perform the travel and the cleaning while performing mutual following without user intervention.

In order for the second cleaner 100b to follow the first cleaner 100a, the second cleaner 100b needs to identify the relative position of the first cleaner 100a.

Moreover, in order to follow the first cleaner 100a, the second cleaner 100b may sense the position of the first cleaner 100a or the traveling route (or a moving route) traveled by the first cleaner 100a.

Hereinafter, a method for the second cleaner 100b to follow the first cleaner 100a will be described in more detail with reference to the accompanying drawings.

For convenience of description, herein, a function/an operation/a control method of the second cleaner 100b will be mainly described.

In this case, the first cleaner 100a may perform the cleaning while moving in a space in which the first cleaner 100a may travel based on a preset algorithm (e.g., a cleaning algorithm and a travel algorithm).

While the first cleaner 100a is moving, the second cleaner 100b may perform the following travel of moving (or cleaning) while following the first cleaner 100a.

Herein, the control method of the second cleaner 100b will be described, so that the second cleaner 100b will be referred to as a body or robot cleaner and the first cleaner 100a will be referred to as another cleaner.

The robot cleaner 100b according to the present disclosure may include a driver 1300 for linearly moving or turning the body, and a sensing unit 1400 for sensing another cleaner 100a in a sensed region having a predetermined angular range in front of the body.

Moreover, the robot cleaner 100b according to the present disclosure may include a controller 1800 that controls the driver 1300 based on information sensed through the sensing unit 1400.

Moreover, the controller 1800 may control the driver 1300 such that the body moves toward said another cleaner sensed in the sensed region.

Herein, the description that the control unit 1800 linearly moves the body or turns the body may mean that the driver 1300 is controlled such that the body is linearly moved or turned.

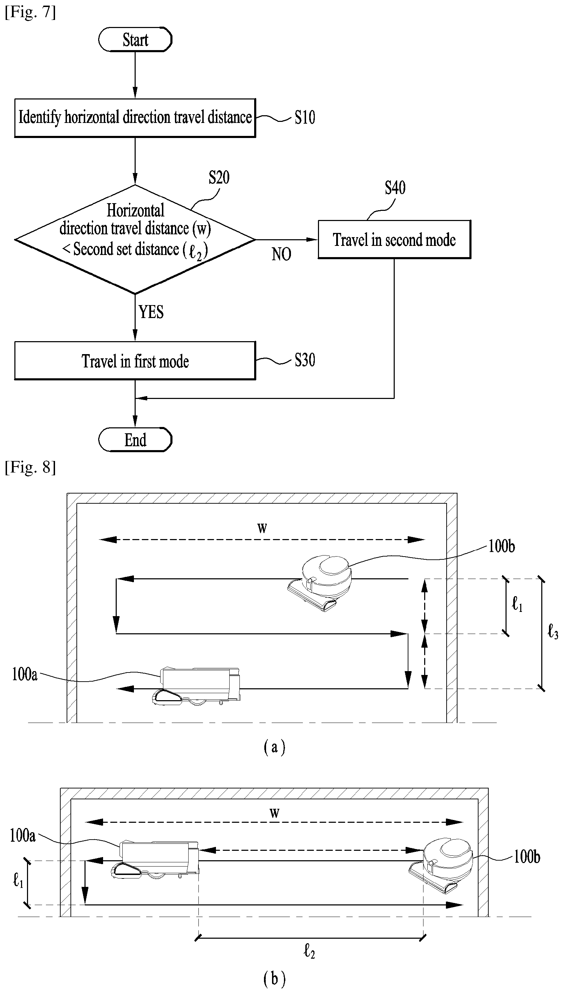

FIG. 7 is a flowchart for describing a control method according to an embodiment. In addition, FIG. 8 is a conceptual diagram for describing a control method shown in FIG. 7.

In the present embodiment, a technology in which the robot cleaner 100b is controlled will be described on the premise that another cleaner 100a travels in a zigzag manner of alternately traveling in a horizontal direction and a longitudinal direction.

That is, another cleaner 100a travels in the zigzag manner of moving in the horizontal direction having a relatively great length, and then switching to a vertical direction to move in the longitudinal direction having a relatively small length. In this connection, the travel in the horizontal direction travels is performed until the obstacle is encountered. That is, another cleaner 100a travels to a section meeting the obstacle, such as a wall in FIG. 8, and then rotates in the vertical direction when encountering the obstacle such as the wall to move in the longitudinal direction. In this connection, another cleaner 100a is moved by a first set distance in the longitudinal direction. In this connection, the first set distance may be the same as a diameter of a body of another cleaner. That is, another cleaner 100a travels in the horizontal direction until immediately before encountering the obstacle, then moves downward by the first set distance when encountering the obstacle, and then travels in the horizontal direction again in an opposite direction. In one example, the first set distance may be variously set based on a convenience of the user. For example, when the first set distance increases, another cleaner performs the cleaning more sparsely, and when the first set distance decreases, another cleaner performs the cleaning more meticulously.

First, the robot cleaner 100b identifies a horizontal direction travel distance (S10). In this connection, the horizontal direction travel distance may be a horizontal direction travel distance of one of the robot cleaner 100b and another cleaner 100a. The robot cleaner 100b travels along the another cleaner 100a. That is, the robot cleaner 100b travels while following the same trajectory as a trajectory of another cleaner 100a with a time difference. Therefore, the horizontal direction travel distances of the robot cleaner and another cleaner are the same. The identification of the horizontal direction travel distance may use actual travel information based on the sensing unit 1400 disposed in the robot cleaner or another cleaner.

In one example, before identifying the horizontal direction travel distance as in S10, the robot cleaner 100b may obtain map information of a region in which the cleaning is performed and position information of the robot cleaner, and calculate the horizontal direction travel distance using the map information. In this connection, the map information and the current position information of the robot cleaner may be obtained through the communicator 1100 of the robot cleaner 100b. In one example, because the robot cleaner and another cleaner perform the cleaning together, the robot cleaner and another cleaner are arranged in the same cleaning region (e.g., a living room, a room, or the like). Thus, position information of another robot cleaner may be obtained together when obtaining position information of the robot cleaner.

Therefore, because the robot cleaner and another cleaner are arranged in the same cleaning region, information on the space to be cleaned may be obtained, and horizontal direction travel information may be calculated using the map information. For example, another cleaner and the robot cleaner may perform the cleaning together while dividing two schemes of cleaning in a case where the horizontal direction travel distance is large like the room and in a case where the horizontal direction travel distance is small like a long corridor.

Then, whether the horizontal direction travel distance is less than a second set distance is identified (S20).

When the horizontal direction travel distance is less than the second set distance, the robot cleaner travels in a first mode (S30), and when the horizontal direction travel distance is greater than the second set distance, the robot cleaner travels in a second mode (S40).

That is, in the present embodiment, the robot cleaner and another cleaner are controlled to perform the cleaning while operating in different modes based on a distance that the robot cleaner or another cleaner may travel in the horizontal direction.

For example, in a situation where the horizontal direction travel distance is small, the robot cleaner or another cleaner needs to travel while frequently switching a direction thereof to the longitudinal direction. In such a situation, a situation in which the robot cleaner and another cleaner may interfere with each other's paths or collide with each other may occur as the robot cleaner and another cleaner constantly switch the directions thereof.

In one example, in a situation where the horizontal direction travel distance is large, the robot cleaner or another cleaner switches the direction thereof to the longitudinal direction relatively less frequently. When the two cleaners travel too far apart, there may be a disadvantage that the user is not able to recognize whether the two cleaners perform the cleaning together.

Therefore, in the present embodiment, the two situations are divided to control the robot cleaner such that the robot cleaner and another cleaner may perform the cleaning while traveling together.

(a) in FIG. 8 is a diagram illustrating the process of traveling in the first mode as in S30, and (b) in FIG. 8 is a diagram illustrating the process of traveling in the second mode as in S40. Because (a) in FIG. 8 has a larger horizontal direction travelable distance w than in (b) in FIG. 8, two robot cleaners travel while maintaining different distances in the two drawings.

When another cleaner 100a and the robot cleaner 100b travel in the first mode as in (a) in FIG. 8, whether the horizontal direction travelable distance w is smaller than a second set distance 12 is identified. When the horizontal direction travel distance or the horizontal direction travelable distance w is smaller than the second set distance 12, another cleaner 100a or the robot cleaner 100b should travel more often in the longitudinal direction when cleaning the same area.

Therefore, when the distance between another cleaner 100a and the robot cleaner 100b is small, another cleaner 100a and the robot cleaner 100b may collide with each other. In order to prevent such problem, the distance in the longitudinal direction between another cleaner and the robot cleaner is maintained larger in the first mode compared to the second mode.

In the first mode, another cleaner 100a may be maintained to be spaced apart from the robot cleaner 100a by a third set distance 13 in the longitudinal direction. In this connection, the third set distance 13 may be twice the first set distance 11.

In one example, the first set distance 11 may be the same as a diameter of a body of the robot cleaner, but may vary variously based on the convenience of the user or a cleaning pattern.

When the first set distance 11 is the same as the diameter of the body of the robot cleaner or another cleaner, because the distance between the robot cleaner and another cleaner in the longitudinal direction is approximately twice the diameter, the two cleaners do not collide with each other even when the robot cleaner and another cleaner frequently switch to travel in the longitudinal direction travel. In addition, when encountering the obstacle in the middle without moving to the wall as in (a) in FIG. 8, the robot cleaner or another cleaner must switch the direction thereof to the longitudinal direction. Because the distance between the two cleaners is maintained large, collision or interference resulted from the switch of the direction is prevented.

In one example, when another cleaner 100a and the robot cleaner 100b travel in the second mode as in (b) in FIG. 8, whether the horizontal direction travelable distance w is larger than the second set distance 12 is identified. When the horizontal direction travel distance or the horizontal direction travelable distance w is larger than the second set distance 12, another cleaner 100a or the robot cleaner 100b is able to travel less in the longitudinal direction when cleaning the same area. In this case, when the distance between another cleaner and the robot cleaner is too large, it is difficult for the user to recognize that the two robot cleaners travel together. In addition, a problem in which the robot cleaner 100b is not able to follow the travel of another cleaner 100a as the robot cleaner 100b misses the travel of another cleaner 100a and another cleaner 100a becomes out of a detection region of the robot cleaner may occur.

Therefore, when the robot cleaner 100b and another cleaner 100a travel in the second mode as in (b) in FIG. 8, the distance between another cleaner and the robot cleaner in the horizontal direction is maintained to be large compared to the first mode. Because the horizontal direction travelable distance w of another cleaner and the robot cleaner is larger than the second set distance 12, even when the distance between another cleaner and the robot cleaner in the horizontal direction remains the same as the second set distance 12, there is no risk of the interference or the collision when another cleaner and the robot cleaner travel. In second mode, the distance between another cleaner and the robot cleaner in the horizontal direction is maintained as the second set distance 12. In this connection, the second set distance 12 may be variously changed based on setting of the user or a manufacturer. The second set distance 12 may be changed to be small such that the user may easily recognize that the two robot cleaners are cleaning together.

In the second mode, before another cleaner 100a encounters the obstacle and starts travel in the longitudinal direction, another cleaner 100a and the robot cleaner 100b travel while maintaining a straight line. Because the horizontal direction travel distance or the horizontal direction travelable distance w is larger than the second set distance 12, while cleaning a corresponding region, another cleaner and the robot cleaner perform the cleaning while maintaining the straight line.

In one example, while another cleaner 100a travels in the longitudinal direction, the robot cleaner 100b travels in the horizontal direction. When encountering the obstacle such as the wall, another cleaner 100a stops the horizontal direction travel, then turns to the vertical direction, and then starts the longitudinal direction travel. Even during the longitudinal direction travel, the robot cleaner 100b moves along a path where another cleaner 100a previously traveled in the horizontal direction. Further, when encountering the obstacle, the robot cleaner 100b may also stop the straight travel, then turn, and then start the longitudinal direction travel.

In one example, in the second mode, another cleaner and the robot cleaner travel in the longitudinal direction by the first set distance, and then switch the direction again to travel in the horizontal direction.

Therefore, while another cleaner 100a travels in the horizontal direction, the robot cleaner 100b travels in the horizontal direction or in the longitudinal direction.

In the second mode, a case in which another cleaner and the robot cleaner travel in the horizontal direction together occurs, but a case in which another cleaner and the robot cleaner travel in the longitudinal direction together does not occur. Therefore, even when a distance between another cleaner and the robot cleaner in the longitudinal direction is not adjusted, the collision between another cleaner and the robot cleaner does not occur.

In the first mode and the second mode described above, the communicator 1100 disposed in the robot cleaner 100b is able to obtain the map information of the region where the cleaning is performed and the position information of the robot cleaner. In this case, the controller 1800 is able to calculate an expected travel distance in the horizontal direction and compare the expected travel distance with the second set distance. In other words, in this case, even when another cleaner or the robot cleaner does not actually travel in the currently located region, the robot cleaner may calculate the horizontal direction travel distance to determine the travel distance between another cleaner and the robot cleaner.

The second set distance may be larger than the first set distance. While the second set distance is a value for selecting the travel mode, the first set distance is the distance that the robot cleaner or another cleaner travels in the longitudinal direction regardless of the travel mode.

In one example, the distance between another cleaner and the robot cleaner may be maintained as relative position calculation between another cleaner 100a and the robot cleaner 100b is performed in a following manner.

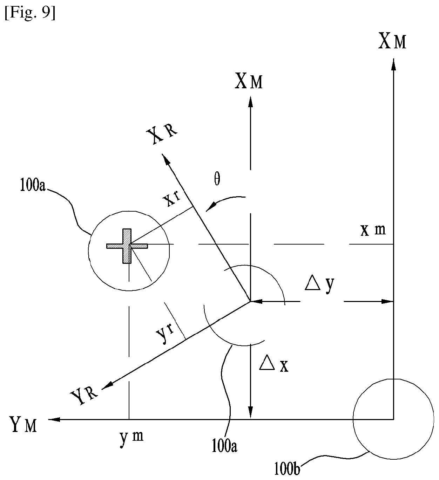

Hereinafter, a process of calculating the positions of another cleaner and the robot cleaner will be described in detail by a conversion matrix and with reference to FIG. 9.

The conversion matrix H may mean the equation that converts the first coordinate representing the current position of said another cleaner 100a relative to the previous position of said another cleaner 100a to the second coordinate representing the current position of said another cleaner 100a relative to the current position of the body of the robot cleaner 100b.

In FIG. 9, the previous position of said another cleaner 100a is represented by a dotted line, and the current position of said another cleaner 100a is represented by a solid line. In addition, the position of the robot cleaner 100b is represented by the solid line.

The conversion matrix will be described as follows and will be represented as a 3X3 matrix in an equation below.

M (current position of another cleaner represented relative to robot cleaner [second coordinate]) = H (conversion matrix) X R (current position of another cleaner represented relative to previous position of another cleaner [first coordinate])

The conversion matrix may be represented as follows as a more detailed equation.

$$M = H \ X \ R \ , \quad \begin{pmatrix} x_m \\ y_m \\ 1 \end{pmatrix} = \begin{pmatrix} \cos\Theta & -\sin\Theta & \Delta x \\ \sin\Theta & \cos\Theta & \Delta y \\ 0 & 0 & 1 \end{pmatrix} \begin{pmatrix} x_r \\ y_r \\ 1 \end{pmatrix}$$

in which Xr and Yr are the first coordinate, and Xm and Ym are the second coordinate.

The first coordinate is able to be calculated based on information provided from the driver that moves said another cleaner. The information provided from the driver of said another cleaner may be information derived from an encoder that measures rotation information of the motor that rotates the wheel that is corrected by a gyro sensor that senses the turning of said another cleaner.

The driver provides a driving force for linearly moving or turning said another cleaner. The first coordinate may be calculated even in a situation where the robot cleaner is not able to receive the signal provided from said another cleaner. Therefore, a relatively accurate position may be determined compared to position information calculated by transmission and reception of the signal between the two cleaners. Moreover, because the driver includes the information about the actual movement of said another cleaner, a change in the position of said another cleaner may be accurately described.

For example, even when the encoder senses that the motor is rotated, said another cleaner may accurately calculate the change in the position of said another cleaner by determining that said another cleaner is not moved but turned, using the gyro sensor. Even when the motor that rotates the wheel is rotated, said another cleaner is able to turn without moving, so that the position of said another cleaner is not always changed when the motor is rotated. Accordingly, when using the gyro sensor, a case in which the turning is only achieved without the change in the position of said another cleaner, a case in which the change in the position and the turning are achieved together, and a case in which only the change in the position is achieved without the turning may be distinguished. Therefore, said another cleaner may accurately calculate the first coordinate representing the current position converted from the previous position using the encoder and the gyro sensor. Further, such information may be transmitted to the network through the communicator of said another cleaner, and then may be transmitted to the robot cleaner 100b through the network.

The second coordinate is measured by the signal (e.g., the signal may be transmitted and received using the UWB module) transmitted and received between said another cleaner 100a and the robot cleaner 100b. The second coordinate may be calculated when the signal is transmitted because said another cleaner 100a is present in the sensed region 800 of the robot cleaner 100b.

With reference to FIG. 9, it may be seen that two coordinate values may be represented by an equal sign using H.

In one example, in order to obtain H, data when said another cleaner 100a is placed in the sensed region 800 of the robot cleaner 100b may be continuously accumulated. Such data will be represented as follows. When said another cleaner 100a is located in the sensed region 800, a lot of data is accumulated. In this connection, the data is a plurality of first coordinates and a plurality of second coordinates respectively corresponding to the plurality of first coordinates.

$$M = H \times R, \quad \begin{bmatrix} x_{m_1} & x_{m_2} & x_{m_3} & \cdots \\ y_{m_1} & y_{m_2} & y_{m_3} & \cdots \\ 1 & 1 & 1 & \cdots \end{bmatrix} = H \begin{bmatrix} x_{r_1} & x_{r_2} & x_{r_3} & \cdots \\ y_{r_1} & y_{r_2} & y_{r_3} & \cdots \\ 1 & 1 & 1 & \cdots \end{bmatrix}$$

a method of least squares may be used to obtain H.

$$H = M \cdot R^T (R R^T)^{-1}$$

In one example, after calculating H, when the first and second coordinates are continuously obtained, H may be newly calculated and updated. As an amount of data calculating H increases, H becomes to have a more reliable value.

Using the conversion matrix H thus calculated, the robot cleaner 100b may follow said another cleaner 100a even when it is difficult for the robot cleaner 100b and said another cleaner 100a to directly transmit and receive the signal. The robot cleaner 100b is not able to directly receive the signal about the position of said another cleaner 100a through the sensing unit when said another cleaner 100a is temporarily out of the sensed region 800 of the robot cleaner 100b. At this time, the robot cleaner 100b may calculate the position of said another cleaner relative to the position of the robot cleaner 100b by the conversion matrix using the travel information of said another cleaner 100a transmitted through the network.

When determining the position of said another cleaner by the conversion matrix, the robot cleaner 100b should receive the first coordinate corresponding to R through the communicator 1100 of the robot cleaner 100b. That is, because R and H are identified, M may be calculated. M is the position of said another cleaner 100a relative to the robot cleaner 100b. Therefore, the robot cleaner 100b may identify the relative position thereof relative to said another cleaner 100a, and the robot cleaner 100b may follow said another cleaner 100a.

In one example, based on the above-described technology, when one of the robot cleaner 100b and said another cleaner 100a firstly contacts a charging device thereof and then is charged, the other memorizes a position of the charging device of said one of those (a second coordinate or a first coordinate of the cleaner that is charged) and then moves to a charging device thereof. Because the other of those memorized the position, the robot cleaner 100b and said another cleaner 100a may be gathered for the following cleaning from the next cleaning even when said another cleaner 100a is out of the sensed region.

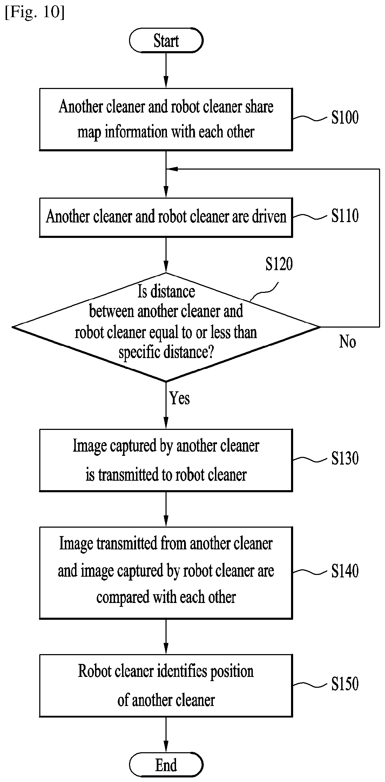

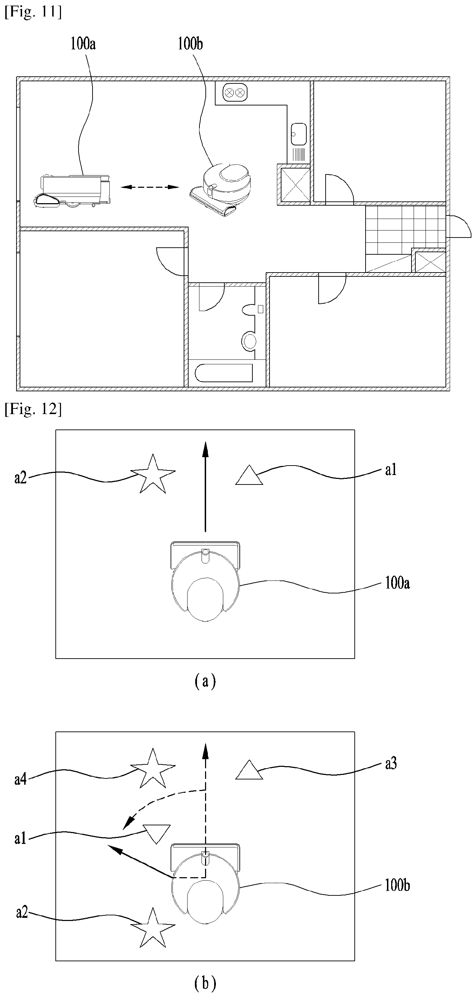

FIG. 10 is a flowchart for describing a control method according to another embodiment. FIG. 11 is a diagram illustrating a state in which two cleaners are arranged in one cleaning space. Further, FIG. 12 is a diagram illustrating a process in which two cleaners recognize and align positions thereof.

Hereinafter, a description will be achieved with reference to FIGS. 10 to 12.

As shown in FIG. 11, another cleaner 100a and the robot cleaner 100b may be arranged in one cleaning space. Typically, a house, which is an entire space where the cleaning is performed, may be divided into several spaces such as the living room, the room, a kitchen, and the like.

Another cleaner 100a has map information on the entire space in a state of having performed the cleaning of the corresponding space at least once. In this connection, the map information may be input by the user, or may be based on a record acquired while another cleaner 100a performs the cleaning. In FIG. 11, another cleaner 100a is able to have the map information on the entire space of the house although being positioned in the living room or the kitchen.

The map information of another cleaner 100a may be transmitted to the robot cleaner 100b (S100). In this connection, the map information may be transmitted while another cleaner and the communicator of the robot cleaner communicate with each other directly. In addition, another cleaner and the robot cleaner is able to transmit the information through the different network such as the Wi-Fi and the like, or through the server as a medium.

In this connection, the shared map information may be map information containing a position at which another cleaner is placed. In addition, map information containing a position at which the robot cleaner is placed may be shared. In practice, another cleaner and the robot cleaner may exist together in the entire space of the house, and furthermore, may exist together in a more specific space such as the living room and the like. Thus, it is preferable to share map information on the space where the two cleaners are positioned.

Another cleaner 100a and the robot cleaner 100b may be moved to start the cleaning at respective charging devices thereof, but each cleaner may be moved to a space requiring the cleaning by the user.

Each of another cleaner 100a and the robot cleaner 100b is turned on and driven (S110). Another cleaner 100a and the robot cleaner 100b are able to move. In particular, the robot cleaner 100b may move in a direction in which the distance to another cleaner 100a is reduced.

In this connection, whether the distance between another cleaner and the robot cleaner is equal to or less than a specific distance is identified (S120). In this connection, the specific distance is equal to or less than 50 cm. The specific distance may mean a distance for an initial arrangement set for another cleaner and the robot cleaner to perform the cleaning while traveling together. That is, when the two cleaners are arranged at the specific distance, afterwards, the two robot cleaners may perform the cleaning together based on a predetermined algorithm.

As described above in FIGS. 5 and 6, another cleaner 100a and the robot cleaner 100b may communicate with each other directly, so that the robot cleaner 100b may identify that the distance to another cleaner 100a is reduced while traveling. For reference, accuracy for the position and the direction of another cleaner 100a of the robot cleaner 100b obtained through the communication between another cleaner 100a and the robot cleaner 100b is not high, so that a technology for improving the accuracy will be added later.

The robot cleaner 100b may move while drawing a circular or a spiral trajectory to reduce the distance to another cleaner 100a. That is, because it is not easy for the robot cleaner 100b to accurately measure the position of the another cleaner 100a and move to the corresponding position, the robot cleaner 100b may find a position where the distance to another cleaner 100a is reduced while moving in various directions, such as the circular or the spiral trajectory.

When the distance between another cleaner and the robot cleaner is not reduced to be equal to or less than the specific distance, the robot cleaner 100b continuously moves such that the distance between another cleaner and the robot cleaner is equal to or less than the specific distance. When the distance is reduced when moving in a specific direction while moving in the circular trajectory, the robot cleaner 100b may identify whether the distance between another cleaner and the robot cleaner is reduced while continuously moving in the corresponding direction.

When the distance between the two cleaners is reduced to be equal to or less than the specific distance, an image captured by another cleaner is transmitted to the robot cleaner 100b (S130). In this connection, like the map information, the two cleaners may communicate with each other directly, and may communicate with each other through the different network or the server.

Because the two cleaners are positioned within the specific distance, images captured by the two cleaners are similar. In particular, when the cameras respectively arranged on the two cleaners are directed forwardly and upwardly, the images captured by the two cleaners should be the same when the positions and the directions of the two cleaners are the same. Therefore, initial positions and directions of the two cleaners for starting the cleaning may be aligned by adjusting the positions and the directions of the two cleaners by comparing the images captured by the two cleaners with each other.

Using the images captured by the two cleaners, a scaled position ($\alpha X$, $\alpha Y$, $\Theta$) of another cleaner is identified based on one cleaner (in this connection, $\alpha$ is a scale factor). Radius data corresponding to the distance between the cleaners may be measured to identify the positions of the cleaners by calculating the scale factor. In this connection, through the radius data, the distance may be measured using a UWB sensor, but other measuring means may be used.

The image transmitted from another cleaner and the image captured by the robot cleaner are compared with each other (S140). With reference to FIG. 12, the process of comparison will be described. (a) in FIG. 12 is a diagram illustrating a state in which another cleaner 100a captures the image, and (b) in FIG. 12 is a diagram illustrating a state in which the robot cleaner 100b captures the image.

The cameras are respectively installed on another cleaner and the robot cleaner to capture regions located forward and upward thereof, and the capturing is performed in a direction indicated by an arrow in each drawing.

As shown in (a) in FIG. 12, in the image captured by another cleaner 100a, an a2 feature point and an a1 feature point are respectively arranged on a left side and a right side around the arrow direction. In other words, the feature point may be selected from the image captured by another cleaner, and in particular, the different feature points on the left side and the right side around the forward region captured by the camera may be selected. Therefore, a left side and a right side of the image captured by the camera may be distinguished.

In (b) in FIG. 12, the robot cleaner 100b initially captures the image based on a dotted arrow. That is, the camera disposed on the robot cleaner is directed forwardly and upwardly, so that an a1 feature point and an a4 feature point are arranged on a left side and an a3 feature point is disposed on a right side around the dotted arrow in capturing the corresponding portion. Therefore, when comparing the feature points by the controller disposed in the robot cleaner, it may be identified that there is a difference in the feature points of the images captured by the two cleaners.

In this case, as shown in (b) in FIG. 12, when the robot cleaner 100b turns in a counterclockwise direction, images in directions in which the two robot cleaners are directed may be similarly implemented. That is, the robot cleaner 100b is turned in the counterclockwise direction, so that the direction in which the camera of the robot cleaner is directed may be changed like a solid arrow. In this connection, in the image captured by the camera of the robot cleaner, an a2 feature point is placed on the left side and the a1 feature point is placed on the right side. Accordingly, the feature points of the image provided by another cleaner in (a) in FIG. 12 and the image captured by the robot cleaner in (b) in FIG. 12 may be similarly arranged. Heading angles of the two cleaners may be similarly aligned through such process. Furthermore, when the feature points are similarly arranged in the images provided by the two robot cleaners, it may be seen that positions of the two cleaners currently viewing the feature points are adjacent to each other within the specific distance. Thus, as described with reference to FIG. 9, the positions of the two robot cleaners may be accurately specified.

As described above, the same feature point may be selected from the image captured by the robot cleaner and the image captured and transmitted from another cleaner, that is, the two images, and the determination may be achieved based on the selected feature point. In this connection, the feature point may be a large object that is easy to be distinguished as the feature or a portion of the large object that is easy to be distinguished as the feature. For example, the feature point may be an object, such as an air purifier, a door, a television, and the like, or may be a portion of an object, such as a corner of a closet, a bed, and the like.

When the feature point is placed at similar positions in the two images, the controller of the robot cleaner may determine that the robot cleaner is disposed at the initial position before starting to travel with another cleaner. When there is a difference between the image provided by another cleaner and the image currently captured by the robot cleaner, the image captured by the camera of the robot cleaner may be changed by moving or turning the robot cleaner. When comparing the image captured by the camera of the robot cleaner and the image provided by another cleaner with each other, and when the position change of the feature point is made in similar directions in the two images, it may be determined that the robot cleaner is disposed at the initial position before starting to travel with another cleaner.

In one example, it is preferable that a plurality of feature points are selected to make it easier to compare the two images with each other and the feature points are divided and arranged on left and right sides around a front central region of another cleaner or the robot cleaner. The cameras of the robot cleaner and another cleaner are respectively arranged to be directed forwardly. When the different feature points are arranged on left and right sides of the camera, it is easy for the controller of the robot cleaner to sense the position and the direction of another cleaner. The robot cleaner may be moved or turned such that the arrangement of the feature points on the left and right sides is the same as the arrangement of the feature points on the left and right sides transmitted from another cleaner, so that the robot cleaner may be placed at the rear of another cleaner in a row. In particular, the robot cleaner and another cleaner may be arranged such that front regions thereof match each other, so that initial moving direction selection may become easier when the robot cleaner and another cleaner perform the cleaning together afterwards.

Through the process described above, the robot cleaner may identify the position of another cleaner from the shared map information (S150).

In addition, another cleaner 100a and the robot cleaner 100b may exchange position information with each other while moving based on the navigation map and/or the SLAM map shared with each other.

The robot cleaner 100b may acquire an image through the sensing unit 1400 while moving or after moving by a predetermined distance, and extract region feature information from the acquired image.

The controller 1800 may extract region the feature information based on the acquired image. In this connection, the extracted region feature information may include a set of probability values for a region and an object recognized based on the acquired image.

In one example, the controller 1800 may determine the current position based on SLAM-based current position node information and the extracted region feature information.

In this connection, the SLAM-based current position node information may correspond to a node most similar to feature information extracted from the acquired image among previously stored node feature information. That is, the controller 1800 may select the current position node information by performing position recognition using feature information extracted from each node.

In addition, in order to further improve an accuracy of the position estimation, the controller 1800 may improve the accuracy of the position recognition by performing the position recognition using both the feature information and the region feature information. For example, the controller 1800 may compare the extracted region feature information with previously stored region feature information to select a plurality of candidate SLAM nodes. Further, the controller 1800 may determine the current position based on candidate SLAM node information most similar to the SLAM-based current position node information among the selected plurality of candidate SLAM nodes.

Alternatively, the controller 1800 may determine the SLAM-based current position node information, and correct the determined current position node information based on the extracted region feature information to determine a final current position.

In this case, the controller 1800 may determine a node most similar to the extracted region feature information among the previously stored region feature information of the nodes existing within a predetermined range based on the SLAM-based current position node information as the final current position.

As a position estimation method using an image, not only a position estimation method using a local feature point such as the corner and the like, but also a position estimation method using a global feature that describes an overall shape of an object, not the local feature, for the position estimation may be used, so that features that are robust against a change in an environment such as lighting/illumination may be extracted. For example, the controller 1800 may extract and store the region feature information (e.g., the living room: a sofa, a table, and a TV / the kitchen: a dining table and a sink / the room: a bed and a desk) when creating the map, and then may estimate the positions of another cleaner 100a and the robot cleaner 100b using various region feature information in an indoor environment.

That is, according to the present disclosure, when storing the environment, the position estimation robust against the change in the lighting/the illumination may be achieved by storing the features in units of the objects, things, and regions rather than using only specific points in the image.

In addition, when at least a portion of each of another cleaner 100a and the robot cleaner 100b is under the object such as the bed, the sofa, and the like, the sensing unit 1400 may not acquire an image sufficiently containing the feature point such as the corner and the like because a field of view thereof is obscured by the object. Alternatively, an accuracy of the feature point extraction using a ceiling image may be lowered at a specific position in an environment with a high ceiling.

However, according to the present disclosure, the controller 1800 may determine the current position using the region feature information such as the sofa and the living room in addition to the feature point such as the corner also in a case in which the object such as the bed, the sofa, and the like obscures the sensing unit 1400, and in a case in which the feature point identification is weak because of the high ceiling.

Thereafter, the robot cleaner may perform the cleaning while traveling with another cleaner as described in FIGS. 7 to 10. The robot cleaner performs the cleaning while traveling along another cleaner. Because the embodiment described above and another embodiment may be combined together, a detailed description thereof will be omitted.

In another embodiment, the robot cleaner 100b includes the driver for moving or turning the body, the communicator for communicating with another cleaner, a sensing unit including a camera for capturing an image, wherein the sensing unit senses another cleaner in the sensing region, and a controller that calculates a position of another cleaner using the image information of another cleaner and the map information received by the communicator. The controller disposed in the robot cleaner 100b may compare an image transmitted from another cleaner with the image captured by the camera of the robot cleaner to adjust a position and a direction relative to another cleaner.

## Claims

1. A method for controlling a robot cleaner, the method comprising:

   a map sharing operation of sharing map information transmitted from a further cleaner to the robot cleaner;
   an image transmitting operation of transmitting an image captured by the further cleaner to the robot cleaner;
   a determining operation of identifying, by the robot cleaner, position information of the further cleaner by comparing the image transmitted from the further cleaner with an image captured by the robot cleaner; and
   a travel operation of performing, by the robot cleaner, cleaning while traveling along the further cleaner.

2. The method of claim 1, wherein the map sharing operation includes:
   sharing map information containing a position where the further cleaner is placed.

3. The method of claim 1, wherein the map sharing operation includes:
   sharing map information containing a position where the robot cleaner is placed.

4. The method of claim 1, further comprising:

before the image transmitting operation,
a moving operation of moving, by the robot cleaner, in a direction of reducing a distance to the further cleaner.

5. The method of claim 4, wherein the moving operation includes:
identifying, by the robot cleaner, whether the distance between the further cleaner and the robot cleaner is reduced to be equal to or less than a specific distance while moving in a circular or a spiral trajectory.

6. The method of claim 1, wherein the determining operation includes:
selecting the same feature point from the two images and performing the determination based on the selected feature point.

7. The method of claim 6, wherein it is determined that the robot cleaner is disposed at an initial position before starting to travel with the further cleaner when the feature point is placed at similar positions in the two images.

8. The method of claim 6, wherein it is determined that the robot cleaner is disposed at an initial position before starting to travel with the further cleaner when a position change of the feature point is achieved in similar directions in the two images.

9. The method of claim 6, wherein a plurality of feature points are selected, and the plurality of feature points are divided and arranged on left and right sides of a front central region of the further cleaner or the robot cleaner.

10. The method of claim 9, wherein the robot cleaner is moved or turned such that arrangement in a left and right direction of the feature points thereof is the same as arrangement in the left and right direction transmitted from the further cleaner.

11. The method of claim 1, wherein the travel operation includes:

traveling, by the further cleaner and the robot cleaner, in a zigzag manner of moving in a horizontal direction with a relatively large length and then switching to a vertical direction to move in a longitudinal direction with a relatively small length,
wherein the further cleaner and the robot cleaner travel in the horizontal direction until encountering an obstacle, and
wherein the further cleaner and the robot cleaner move in the longitudinal direction by a first set distance.

12. The method of claim 11, wherein the travel operation includes:

a first operation of identifying a horizontal direction travel distance;
a second operation of identifying whether the horizontal direction travel distance is smaller than a second set distance; and
an operation of allowing the robot cleaner to travel in a first mode when the horizontal direction travel distance is smaller than the second set distance and allowing the robot cleaner to travel in a second mode when the horizontal direction travel distance is larger than the second set distance to allow the robot cleaner to perform the cleaning while traveling along the further cleaner.

13. The method of claim 12, wherein the horizontal direction travel distance is a horizontal direction travel distance of one of the robot cleaner and the further cleaner.

14. The method of claim 12, wherein a distance between the further cleaner and the robot cleaner in the longitudinal direction is maintained larger in the first mode compared to the second mode.

15. The method of claim 12, wherein a distance between the further cleaner and the robot cleaner in the horizontal direction is maintained smaller in the first mode compared to the second mode.

**Patentansprüche**

1. Verfahren zum Steuern eines Roboterreinigers, wobei das Verfahren die folgenden Schritte umfasst:

einen Kartenteilungsvorgang zum Teilen von Karteninformationen, die von einem weiteren Reiniger an den Roboterreiniger übertragen werden;

einen Bildübertragungsvorgang zum Übertragen eines Bilds, das von dem weiteren Reiniger aufgenommen wurde, zum Roboterreiniger;

einen Ermittlungsvorgang zum Identifizieren von Positionsinformationen des weiteren Reinigers durch den Roboterreiniger durch Vergleichen des Bilds, das vom weiteren Reiniger übertragen wurde, mit einem Bild, das vom Roboterreiniger aufgenommen wurde; und

einen Bewegungsvorgang zum Ausführen einer Reinigung während einer Bewegung entlang des weiteren Reinigers durch den Roboterreiniger.

2. Verfahren nach Anspruch 1, wobei der Kartenteilungsvorgang den folgenden Schritt umfasst:
Teilen von Karteninformationen, die eine Position enthalten, bei der der weitere Reiniger angeordnet ist.

3. Verfahren nach Anspruch 1, wobei der Kartenteilungsvorgang den folgenden Schritt umfasst:
Teilen von Karteninformationen, die eine Position enthalten, bei der der Roboterreiniger angeordnet ist.

4. Verfahren nach Anspruch 1, das ferner den folgenden Schritt umfasst:

vor dem Bildübertragungsvorgang
einen Bewegungsvorgang zum Bewegen in einer Richtung zum Verringern eines Abstands zum weiteren Reiniger durch den Roboterreiniger.

5. Verfahren nach Anspruch 4, wobei der Bewegungsvorgang den folgenden Schritt umfasst:
Identifizieren durch den Roboterreiniger, ob der Abstand zwischen dem weiteren Reiniger und dem Roboterreiniger während einer Bewegung auf einer kreisförmigen oder spiralförmigen Bahnkurve so verringert wird, dass er gleich einem bestimmten Abstand oder kleiner ist.

6. Verfahren nach Anspruch 1, wobei der Ermittlungsvorgang den folgenden Schritt umfasst:
Auswählen des gleichen Merkmalspunkts aus den zwei Bildern und Ausführen der Ermittlung auf der Basis des ausgewählten Merkmalspunkts.

7. Verfahren nach Anspruch 6, wobei ermittelt wird, dass der Roboterreiniger an einer Startposition angeordnet ist, bevor er beginnt, sich mit dem weiteren Reiniger zu bewegen, wenn der Merkmalspunkt in den zwei Bildern an gleichen Positionen angeordnet ist.

8. Verfahren nach Anspruch 6, wobei ermittelt wird, dass der Roboterreiniger an einer Startposition angeordnet ist, bevor er beginnt, sich mit dem weiteren Reiniger zu bewegen, wenn eine Positionsänderung des Merkmalspunkts in den zwei Bildern in gleichen Richtungen ausgeführt wird.

9. Verfahren nach Anspruch 6, wobei mehrere Merkmalspunkte ausgewählt werden und wobei die mehreren Merkmalspunkte aufgeteilt und auf der linken und rechten Seite eines vorderen zentralen Bereichs des weiteren Reinigers oder des Roboterreinigers angeordnet werden.

10. Verfahren nach Anspruch 9, wobei der Roboterreiniger so bewegt oder gedreht wird, dass eine Anordnung der Merkmalspunkte in einer Links- und Rechtsrichtung der Anordnung in der Links- und Rechtsrichtung, die vom weiteren Reiniger übertragen wird, gleicht.

11. Verfahren nach Anspruch 1, wobei der Bewegungsvorgang die folgenden Schritte umfasst:

Bewegen des weiteren Reinigers und des Roboterreinigers in einer Zickzack-Art einer Bewegung in einer horizontalen Richtung mit einer relativ großen Länge und daraufhin Umschalten zu einer vertikalen Richtung, um sich in einer Längsrichtung mit einer relativ kleinen Länge zu bewegen,
wobei sich der weitere Reiniger und der Roboterreiniger in der horizontalen Richtung bewegen, bis sie auf ein Hindernis treffen, und
wobei sich der weitere Reiniger und der Roboterreiniger in der Längsrichtung über eine erste eingestellte Strecke bewegen.

12. Verfahren nach Anspruch 11, wobei der Bewegungsvorgang die folgenden Schritte umfasst:

einen ersten Vorgang zum Identifizieren einer Bewegungsstrecke in horizontaler Richtung;

einen zweiten Vorgang zum Identifizieren, ob die Bewegungsstrecke in der horizontalen Richtung kürzer als eine zweite eingestellte Strecke ist; und

einen Vorgang, um zuzulassen, dass sich der Roboterreiniger in einer ersten Betriebsart bewegt, wenn die Bewegungsstrecke in der horizontalen Richtung kürzer als die zweite eingestellte Strecke ist, und um zuzulassen, dass sich der Roboterreiniger in einer zweiten Betriebsart bewegt, wenn die Bewegungsstrecke in der horizontalen Richtung länger als die zweite eingestellte Strecke ist, damit der Roboterreiniger die Reinigung ausführen kann, während er sich entlang des weiteren Reinigers bewegt.

13. Verfahren nach Anspruch 12, wobei die Bewegungsstrecke in horizontaler Richtung eine Bewegungsstrecke in horizontaler Richtung des Roboterreinigers oder des weiteren Reinigers ist.

14. Verfahren nach Anspruch 12, wobei ein Abstand zwischen dem weiteren Reiniger und dem Roboterreiniger in der Längsrichtung in der ersten Betriebsart im Vergleich zur zweiten Betriebsart größer gehalten wird.

15. Verfahren nach Anspruch 12, wobei ein Abstand zwischen dem weiteren Reiniger und dem Roboterreiniger in der horizontalen Richtung in der ersten Betriebsart im Vergleich zur zweiten Betriebsart kleiner gehalten wird.

**Revendications**

1. Procédé de commande d'un robot nettoyeur, le procédé comportant :

une opération de partage de carte consistant à partager des informations cartographiques transmises à partir d'un appareil de nettoyage supplémentaire au robot nettoyeur ;

une opération de transmission d'image consistant à transmettre une image capturée par l'appareil de nettoyage supplémentaire au robot nettoyeur ;

une opération de détermination consistant à identifier, par le robot nettoyeur, des informations de position de l'appareil de nettoyage supplémentaire en comparant l'image transmise à partir de l'appareil de nettoyage supplémentaire avec une image capturée par le robot nettoyeur ; et

une opération de déplacement consistant à réaliser, par le robot nettoyeur, un nettoyage tout en se déplaçant le long de l'appareil de nettoyage supplémentaire.

2. Procédé selon la revendication 1, dans lequel l'opération de partage de carte inclut de :
partager des informations cartographiques contenant une position où l'appareil de nettoyage supplémentaire est placé.

3. Procédé selon la revendication 1, dans lequel l'opération de partage de carte inclut de :
partager des informations cartographiques contenant une position où le robot nettoyeur est placé.

4. Procédé selon la revendication 1, comportant en outre :

avant l'opération de transmission d'image,
une opération de déplacement consistant à se déplacer, par le robot nettoyeur, dans une direction de réduction d'une distance par rapport à l'appareil de nettoyage supplémentaire.

5. Procédé selon la revendication 4, dans lequel l'opération de déplacement inclut de :

identifier, par le robot nettoyeur, si la distance entre l'appareil de nettoyage supplémentaire et le robot nettoyeur est réduite pour être égale ou inférieure à une distance spécifique tout en se déplaçant selon une trajectoire circulaire ou hélicoïdale.

6. Procédé selon la revendication 1, dans lequel l'opération de détermination inclut de :
sélectionner le même point de caractéristique parmi les deux images et réaliser la détermination sur la base du point de caractéristique sélectionné.

7. Procédé selon la revendication 6, dans lequel il est déterminé que le robot nettoyeur est disposé à une position initiale avant de commencer à se déplacer avec l'appareil de nettoyage supplémentaire lorsque le point de caractéristique est placé à des positions similaires dans les deux images.

8. Procédé selon la revendication 6, dans lequel il est déterminé que le robot nettoyeur est disposé à une position initiale avant de commencer à se déplacer avec l'appareil de nettoyage supplémentaire lorsqu'un changement de position du point de caractéristique est obtenu dans des directions similaires dans les deux images.

9. Procédé selon la revendication 6, dans lequel des points d'une pluralité de points de caractéristique sont sélectionnés, et les points de la pluralité de points de caractéristique sont divisés et agencés sur des côtés gauche et droit d'une zone centrale avant de l'appareil de nettoyage supplémentaire ou du robot nettoyeur.

10. Procédé selon la revendication 9, dans lequel le robot nettoyeur est déplacé ou tourné de telle sorte qu'un agencement dans une direction à gauche et à droite des points de caractéristique de celui-ci est le même qu'un agencement dans la direction à gauche et à droite transmis à partir de l'appareil de nettoyage supplémentaire.

11. Procédé selon la revendication 1, dans lequel l'opération de déplacement inclut de :

se déplacer, par l'appareil de nettoyage supplémentaire et le robot nettoyeur, d'une manière en zigzag consistant à se déplacer dans une direction horizontale avec une longueur relativement grande et basculer ensuite vers une direction verticale pour se déplacer dans une direction longitudinale avec une longueur relativement petite, dans lequel l'appareil de nettoyage supplémentaire et le robot nettoyeur se déplacent dans la direction horizontale jusqu'à rencontrer un obstacle, et dans lequel l'appareil de nettoyage supplémentaire et le robot nettoyeur se déplacent dans la direction longitudinale sur une première distance définie.

12. Procédé selon la revendication 11, dans lequel l'opération de déplacement inclut :

une première opération consistant à identifier une distance de déplacement dans la direction horizontale ; une seconde opération consistant à identifier si la distance de déplacement dans la direction horizontale est inférieure à une seconde distance définie ; et une opération consistant à laisser le robot nettoyeur se déplacer dans un premier mode lorsque la distance de déplacement dans la direction horizontale est inférieure à la seconde distance définie et laisser le robot nettoyeur se déplacer dans un second mode lorsque la distance de déplacement dans la direction horizontale est supérieure à la seconde distance définie pour laisser le robot nettoyeur réaliser le nettoyage tout en se déplaçant le long de l'appareil de nettoyage supplémentaire.

13. Procédé selon la revendication 12, dans lequel la distance de déplacement dans la direction horizontale est une distance de déplacement dans la direction horizontale d'un élément parmi le robot nettoyeur et l'appareil de nettoyage supplémentaire.

14. Procédé selon la revendication 12, dans lequel une distance entre l'appareil de nettoyage supplémentaire et le robot nettoyeur dans la direction longitudinale est maintenue plus grande dans le premier mode que dans le second mode.

15. Procédé selon la revendication 12, dans lequel une distance entre l'appareil de nettoyage supplémentaire et le robot nettoyeur dans la direction horizontale est maintenue plus petite dans le premier mode que dans le second mode.

[Fig. 1]

[Fig. 2]

[Fig. 3]

[Fig. 4]

[Fig. 5]

( a )

( b )

( c )

[Fig. 6]

( a )

( b )

( c )

[Fig. 7]

```
            ┌─────────┐
            │  Start  │
            └────┬────┘
                 │
                 ▼
   ┌──────────────────────────────────────┐
   │ Identify horizontal direction travel │──── S10
   │              distance                │
   └──────────────────┬───────────────────┘
                      │
                      ▼                    S20
           ╱─────────────────────╲
          ╱      Horizontal        ╲                        S40
         ╱ direction travel distance ╲        NO     ┌──────────────────────┐
        ╱  (w) < Second set distance  ╲──────────────│ Travel in second mode│
         ╲        ( ℓ₂ )              ╱               └───────────┬──────────┘
          ╲                         ╱                             │
           ╲───────────────────────╱                             │
                      │                                           │
                     YES                                          │
                      │                                           │
                      ▼                                           │
        ┌──────────────────────────┐                             │
        │    Travel in first mode  │──── S30                     │
        └─────────────┬────────────┘                             │
                      │                                           │
                      ▼◄──────────────────────────────────────────┘
                ┌─────────┐
                │   End   │
                └─────────┘
```

[Fig. 8]

( a )

( b )

[Fig. 9]

[Fig. 10]

```
                    ┌──────────────┐
                    │    Start     │
                    └──────┬───────┘
                           │
                           ▼
        ┌─────────────────────────────────────┐
        │  Another cleaner and robot cleaner   │ ── S100
        │   share map information with each    │
        │              other                   │
        └──────────────────┬──────────────────┘
                           │
                           ▼◄──────────────────────┐
        ┌─────────────────────────────────────┐    │
        │  Another cleaner and robot cleaner   │ ── S110
        │            are driven                │    │
        └──────────────────┬──────────────────┘    │
                           │          S120          │
                           ▼                        │
                  ╱────────────────╲                │
                 ╱   Is distance    ╲               │
                ╱  between another   ╲              │
               ╱ cleaner and robot    ╲    No       │
               ╲ cleaner equal to or  ╱─────────────┘
                ╲ less than specific ╱
                 ╲    distance?     ╱
                  ╲────────┬───────╱
                           │ Yes
                           ▼
        ┌─────────────────────────────────────┐
        │  Image captured by another cleaner   │ ── S130
        │    is transmitted to robot cleaner   │
        └──────────────────┬──────────────────┘
                           │
                           ▼
        ┌─────────────────────────────────────┐
        │  Image transmitted from another      │ ── S140
        │  cleaner and image captured by robot │
        │  cleaner are compared with each other│
        └──────────────────┬──────────────────┘
                           │
                           ▼
        ┌─────────────────────────────────────┐
        │   Robot cleaner identifies position  │ ── S150
        │         of another cleaner           │
        └──────────────────┬──────────────────┘
                           │
                           ▼
                    ┌──────────────┐
                    │     End      │
                    └──────────────┘
```

[Fig. 11]

[Fig. 12]

( a )

( b )

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017036532 A
- KR 20170174493
- WO 2020004834 A